# EUROPEAN PATENT SPECIFICATION

(11) **EP 2 911 231 B1**
(45) Date of publication and mention of the grant of the patent: **22.03.2017**
(21) Application number: 13849555.1
(22) Date of filing: 21.10.2013
(51) Int. Cl.: H01M 10/0569, H01M 10/0567, H01M 10/0525, H01M 10/42, H01M 10/0568

(54) **NON-AQUEOUS ELECTROLYTIC SOLUTION FOR SECONDARY BATTERIES AND LITHIUM-ION SECONDARY BATTERY COMPRISING THE SAME**
NICHTWÄSSRIGE ELEKTROLYTLÖSUNG FÜR SEKUNDÄRBATTERIEN UND LITHIUM-IONEN-SEKUNDÄRBATTERIE DIESELBE UMFASSEND
SOLUTION D'ÉLECTROLYTE NON-AQUEUX POUR BATTERIES SECONDAIRES ET BATTERIE SECONDAIRE DE TYPE LITHIUM-ION COMPRENANT CETTE DERNIÈRE

(30) Priority: 22.10.2012 JP 2012233286
(43) Date of publication of application: 26.08.2015
(73) Proprietor: Asahi Glass Company, Limited, Tokyo 100-8405 (JP)
(72) Inventor: ONOZAKI, Yu, Tokyo 100-8405 (JP); IWAYA, Masao, Tokyo 100-8405 (JP)
(74) Representative: Müller-Boré & Partner Patentanwälte PartG mbB
(86) International application number: PCT/JP2013/078503
(87) International publication number: WO 2014/065246

(56) References cited:
- WO-A1-2006/115023
- WO-A1-2012/011508
- CN-A- 102 306 838
- JP-A- 2003 068 358
- JP-A- 2004 087 136
- JP-A- 2006 127 933
- JP-A- 2008 135 273
- JP-A- 2008 192 504
- JP-A- 2010 034 050
- JP-A- 2010 086 915
- US-A1- 2004 043 299
- US-A1- 2008 076 030
- US-A1- 2010 129 721

## Description

### TECHNICAL FIELD

The present invention relates to a non-aqueous electrolyte solution for secondary batteries, and a lithium ion secondary battery.

### BACKGROUND ART

As a non-aqueous electrolyte solution to be used for lithium ion secondary batteries (hereinafter sometimes referred to simply as "secondary batteries"), a non-aqueous electrolyte solution comprising a fluorinated solvent, a cyclic carbonate compound, a cyclic carboxylic acid ester compound and a lithium salt, has, for example, been proposed (see e.g. Patent Documents 1 and 2).

Patent Documents 3 to 6 disclose non-aqueous electrolytic solutions including a lithium salt dissolved in a solvent mixture comprising a fluorinated ether compound and a cyclic carboxylic acid ester compound, such as γ-butyrolactone (GBL) or γ-valerolactone (GVL). Besides, Patent Documents 7 to 12 describe non-aqueous electrolyte compositions comprising a lithium chelate complex, such as lithium bis(oxalato)borate (LiBOB) or lithium difluoro(oxalato)borate (LiDFOB).

J In general, during use of a secondary battery, the battery temperature rises due to Joule heat, and if the battery temperature reaches a high temperature at a level exceeding 150°C, thermal runaway may occur to cause breakage of the battery. Such thermal runaway is known to be caused by heat generation which occurs when the electrolyte solution and the positive electrodes and negative electrodes are reacted and decomposed. That is, thermal runaway starts when, due to Joule heat, the temperature of the secondary battery reaches a temperature at which the electrolyte solution and the positive and negative electrodes are reactive and decomposable. Therefore, it is important that the non-aqueous electrolyte solution to be used for a secondary battery has a low reactivity with positive and negative electrodes and is less likely to cause heat generation due to a reaction with them.

Further, a secondary battery is being actively studied for application to e.g. a battery mounted on a vehicle such as an electric car which requires higher energy. For such a purpose, the non-aqueous electrolyte solution is required to be excellent in battery properties such as cycle properties and rate properties while thermal runaway is prevented.

Under these circumstances, it is desired to further improve the battery properties such as cycle properties and rate properties while securing adequate stability capable of preventing thermal runaway, as compared with conventional non-aqueous electrolyte solutions as disclosed in Patent Documents 1 and 2.

### PRIOR ART DOCUMENTS

### PATENT DOCUMENTS

Patent Document 1: JP-A-2008-192504
Patent Document 2: JP-A-2008-257988
Patent Document 3: JP 2010 086915 A
Patent Document 4: WO 2012/011508 A1
Patent Document 5: JP 2004 087136 A
Patent Document 6: CN 102 306 838 A
Patent Document 7: US 2010/129721 A1
Patent Document 8: US 2008/076030 A1
Patent Document 9: JP 2006 127933 A
Patent Document 10: WO 2006/115023 A1
Patent Document 11: JP 2003 068358 A
Patent Document 12: US 2004/043299 A1

### DISCLOSURE OF INVENTION

### TECHNICAL PROBLEM

It is an object of the present invention to provide a non-aqueous electrolyte solution for secondary batteries, which has a low reactivity with positive and negative electrodes and which is excellent in stability to prevent thermal runaway of a secondary battery and excellent also in battery properties such as cycle properties and rate properties, and a lithium ion secondary battery employing such a non-aqueous electrolyte solution for secondary batteries.

### SOLUTION TO PROBLEM

The present invention provides the following [1] to [17] as its gist.
[1] A non-aqueous electrolyte solution for secondary batteries, comprising an electrolyte salt and a liquid composition, wherein the electrolyte salt is a lithium salt, the lithium salt contains a compound represented by the following formula (1), and the liquid composition comprises a fluorinated solvent (A) containing at least one member selected from the group consisting of a fluorinated ether compound, a fluorinated chain carboxylic acid ester compound and a fluorinated chain carbonate compound, and a cyclic carboxylic acid ester compound (B): 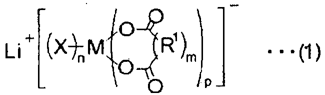 wherein
   M is a boron atom or a phosphorus atom, R¹ is a C₁₋₁₀ alkylene group which may have a substituent, X is a halogen atom, n is an integer of from 0 to 4, m is 0 or 1, and p is 1 or 2.
[2] The non-aqueous electrolyte solution for secondary batteries according to the above [1], wherein the content of the fluorinated solvent (A) in the non-aqueous electrolyte solution is from 30 to 80 mass%.
[3] The non-aqueous electrolyte solution for secondary batteries according to the above [1] or [2], wherein N_{B}/N_{Li}, i.e. the ratio of the total number of moles (N_{B}) of the cyclic carboxylic acid ester compound (B) to the total number of moles (N_{Li}) of lithium atoms derived from the lithium salt, is from 1.5 to 8.0.
[4] The non-aqueous electrolyte solution for secondary batteries according to any one of the above [1] to [3], wherein the compound represented by the formula (1) contains at least one member selected from the group consisting of compounds represented by the following formulae (1-1) to (1-5): 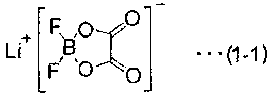 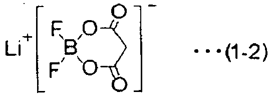 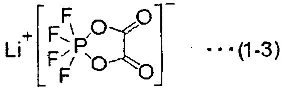 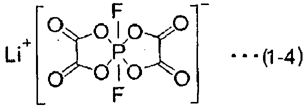 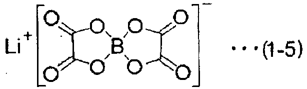
[5] The non-aqueous electrolyte solution for secondary batteries according to any one of the above [1] to [4], wherein in the non-aqueous electrolyte solution, the content of the compound represented by the formula (1) is from 0.01 to 10 mass%.
[6] The non-aqueous electrolyte solution for secondary batteries according to any one of the above [1] to [5], wherein the fluorinated ether compound is at least one member selected from the group consisting of compounds represented by the following formula (2) and compounds represented by the following formula (3): R²-O-R³ ···(2) 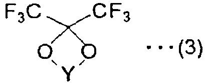 wherein each of R² and R³ which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₂₋₁₀ alkyl group having an etheric oxygen atom, or a C₂₋₁₀ fluorinated alkyl group having an etheric oxygen atom, provided that one or each of R² and R³ is a C₁₋₁₀ fluorinated alkyl group, a C₃₋₁₀ fluorinated cycloalkyl group or a C₂₋₁₀ fluorinated alkyl group having an etheric oxygen atom, and Y is a C₁₋₅ alkylene group, a C₁₋₅ fluorinated alkylene group, a C₂₋₅ alkylene group having an etheric oxygen atom, or a C₂₋₅ fluorinated alkylene group having an etheric oxygen atom.
[7] The non-aqueous electrolyte solution for secondary batteries according to any one of the above [1] to [6], wherein the cyclic carboxylic acid ester compound (B) is at least one member selected from the group consisting of compounds represented by the following formula (6): 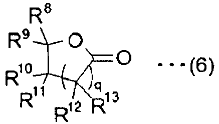 wherein each of R⁸ to R¹³ which are independent of each other, is a hydrogen atom, a fluorine atom, a chlorine atom, a C₁₋₂ alkyl group, a C₁₋₂ fluorinated alkyl group, or a C₂₋₃ alkyl group having an etheric oxygen atom, and q is an integer of from 0 to 3.
[8] The non-aqueous electrolyte solution for secondary batteries according to any one of the above [1] to [7], wherein the fluorinated ether compound is at least one member selected from the group consisting of CF₃ CH₂ OCF₂ CHF₂, CF₃ CH₂ OCF₂ CHFCF₃, CHF₂CF₂CH₂OCF₂CHF₂, CH₃CH₂CH₂OCF₂CHF₂, CH₃CH₂OCF₂CHF₂ and CHF₂CF₂CH₂OCF₂ CHFCF₃.
[9] The non-aqueous electrolyte solution for secondary batteries according to any one of the above [1] to [8], wherein the fluorinated solvent (A) contains the fluorinated ether compound.
[10] The non-aqueous electrolyte solution for secondary batteries according to any one of the above [1] to [9], wherein the cyclic carboxylic acid ester compound (B) is at least one member selected from the group consisting of γ-butyrolactone and γ-valerolactone.
[11] The non-aqueous electrolyte solution for secondary batteries according to any one of the above [1] to [10], wherein the lithium salt contains LiPF₆.
[12] The non-aqueous electrolyte solution for secondary batteries according to any one of the above [1] to [11], wherein the content of the compound represented by the formula (1) in the lithium salt is from 0.05 to 95 mol%.
[13] The non-aqueous electrolyte solution for secondary batteries according to any one of the above [1] to [12], wherein the proportion of the mass of the cyclic carboxylic acid ester compound (B) to the total mass of at least one compound (C) selected from the group consisting of a cyclic carbonate compound, a chain carbonate compound having no fluorine atom, and a chain carboxylic acid ester compound having no fluorine atom, in the non-aqueous electrolyte solution, is at most 30 mass%.
[14] The non-aqueous electrolyte solution for secondary batteries according to any one of the above [1] to [13], wherein the content of a chain carbonate compound having no fluorine atom in the non-aqueous electrolyte solution is at most 20 mass%.
[15] The non-aqueous electrolyte solution for secondary batteries according to any one of the above [1] to [14], wherein the content of the lithium salt in the non-aqueous electrolyte solution is from 0.5 to 1.8 mol/L.
[16] The non-aqueous electrolyte solution for secondary batteries according to any one of the above [1] to [16], wherein the content of the cyclic carboxylic acid ester compound (B) in the non-aqueous electrolyte solution is from 4 to 60 mass%.
[17] A lithium ion secondary battery comprising a positive electrode containing, as an active material, a material capable of absorbing and desorbing lithium ions, a negative electrode containing, as an active material, at least one member selected from the group consisting of metal lithium, an lithium alloy and a carbon material capable of absorbing and desorbing lithium ions, and the non-aqueous electrolyte solution for secondary batteries as defined in any one of the above [1] to [16].

### ADVANTAGEOUS EFFECTS OF INVENTION

The non-aqueous electrolyte solution for secondary batteries of the present invention has a low reactivity with a positive electrode and a negative electrode and is excellent in stability to prevent thermal runaway of a secondary battery and excellent also in battery properties such as cycle properties and rate properties.

The lithium ion secondary battery of the present invention is less likely to undergo thermal runaway and is excellent in stability and excellent also in battery properties such as cycle properties and rate properties.

### DESCRIPTION OF EMBODIMENTS

In this specification, a compound represented by the formula (1) will be referred to as a compound (1) unless otherwise specified, and the same applies to compounds represented by other formulae.

In this specification, "fluorinated" means that some or all of hydrogen atoms bonded to carbon atoms are substituted by fluorine atoms. A "fluorinated alkyl group" is a group having some or all of hydrogen atoms in an alkyl group substituted by fluorine atoms. In a partly fluorinated group, hydrogen atoms and fluorine atoms are present.

### <Non-aqueous electrolyte solution for secondary batteries>

The non-aqueous electrolyte solution for secondary batteries of the present invention (hereinafter sometimes referred to simply as "the non-aqueous electrolyte solution") comprises an electrolyte salt and a liquid composition. The electrolyte salt is a lithium salt. The liquid composition comprises a fluorinated solvent (A) and a cyclic carboxylic acid ester compound (B), which will be described later.

A non-aqueous electrolyte solution is an electrolyte solution containing substantially no water, and even if it contains water, the amount of water is within such a range that performance degradation of a secondary battery using the non-aqueous electrolyte solution is thereby not observed. The amount of water contained in such a non-aqueous electrolyte solution is preferably at most 500 mass ppm, more preferably at most 100 mass ppm, particularly preferably at most 50 mass ppm, based on the total mass of the non-aqueous electrolyte solution. The lower limit of the amount of water is 0 mass ppm.

### [Lithium salt]

The lithium salt is an electrolyte salt which will be dissociated in the non-aqueous electrolyte solution to supply lithium ions. The non-aqueous electrolyte solution of the present invention contains, as such a lithium salt, the following compound (1) as an essential component. As the non-aqueous electrolyte solution of the present invention contains the compound (1) as a lithium salt, it becomes a non-aqueous electrolyte solution excellent in battery properties such as cycle properties and rate properties. This is considered to be as follows.

It is considered that at the time of charging the secondary battery, the compound (1) is decomposed on the negative electrode to form a lithium ion conductive coating film (SEI: solid electrolyte interface) having a small interface resistance on the negative electrode surface. Heretofore, as a coating film-forming agent to form such SEI, vinylene carbonate (VC) or the like has been known. As compared with the conventional coating film-forming agent such as VC or the like, the compound (1) is capable of forming good SEI having a smaller interface resistance, whereby the non-aqueous electrolyte solution is considered to become excellent in battery properties such as cycle properties and rate properties. 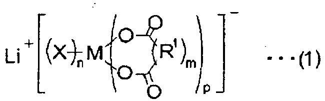 In the formula (1), M is a boron atom or a phosphorus atom, R¹ is a C₁₋₁₀ alkylene group which may have a substituent, X is a halogen atom, n is an integer of from 0 to 4, m is 0 or 1, and p is 1 or 2.

When M is a boron atom and p is 1, n is 2.

When M is a boron atom and p is 2, n is 0.

When M is a phosphorus atom and p is 1, n is 4.

When M is a phosphorus atom and p is 2, n is 2.

When p is 2, two m may both be 0 or both be 1, or one of them may be 0 and the other may be 1.

When p is 2 and two m are both 1, two R¹ may be groups different from each other or may be the same groups.

R¹ is a C₁₋₁₀ alkylene group, and this alkylene group may have a substituent. The substituent may specifically be e.g. a halogen atom, a chain or cyclic alkyl group, an aryl group, a sulfonyl group, a cyano group, a hydroxy group or an alkoxy group, as a substitute for a hydrogen atom on an alkylene group.

X is preferably a fluorine atom or a chlorine atom, particularly preferably a fluorine atom.

As the compound (1), one type may be used alone, or two or more types may be used in combination.

The compound represented by the formula (1) preferably contains at least one member selected from the group consisting of the following compounds (1-1) to (1-5), since it is thereby possible to readily obtain a non-aqueous electrolyte solution excellent in battery properties such as cycle properties and rate properties.

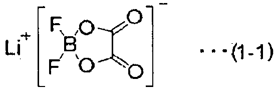

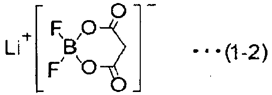

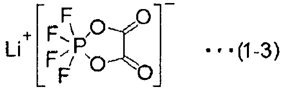

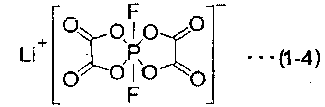

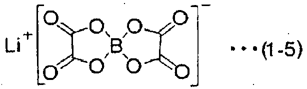

The lithium salt may contain lithium salts other than the compound (1). As such other lithium salts, for example, LiPF₆, the following compound (7) (wherein k is an integer of from 1 to 5), FSO₂N(Li)SO₂F, CF₃SO₂N(Li)SO₂CF₃, CF₃CF₂SO₂N(Li)SO₂CF₂CF₃, LiClO₄, LibF₄, etc. may be mentioned. Among them, LiPF₆ is preferred as other lithium salt. As the lithium salt, it is particularly preferred to contain the compound (1) and LiPF₆. When the lithium salt contains LiPF₆, the ion conductivity will be good.

The lithium salt to be contained in the non-aqueous electrolyte solution may be one type only, or two or more types in combination.

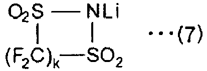

The lower limit value for the content of the compound (1) in the lithium salt to be contained in the non-aqueous electrolyte solution of the present invention is preferably 0.05 mol%, more preferably 0.1 mol%, further preferably 0.5 mol%, particularly preferably 1 mol%. When the content of the compound (1) is at least the lower limit value, a non-aqueous electrolyte solution excellent in battery properties such as cycle properties and rate properties is readily obtainable. The upper limit value for the content of the compound (1) in the lithium salt to be contained in the non-aqueous electrolyte solution of the present invention is preferably 95 mol%, more preferably 80 mol%, further preferably 60 mol%, particularly preferably 40 mol%. When the content of the compound (1) is at most the upper limit value, by relatively increasing the content of LiPF₆, a highly practical non-aqueous electrolyte solution excellent in ion conductivity will be readily be obtainable, and a non-aqueous electrolyte solution excellent in battery properties such as rate properties will be readily obtainable.

In a case where LiPF₆ is contained in the non-aqueous electrolyte solution of the present invention, the lower limit value for the content of LiPF₆ in the lithium salt is preferably 5 mol%, more preferably 20 mol%, further preferably 40 mol%, particularly preferably 60 mol%. When the content of LiPF₆ is at least the lower limit value, a highly practical non-aqueous electrolyte solution excellent in ion conductivity is readily obtainable. Further, the upper limit value for the content of LiPF₆ in the lithium salt is preferably 99.95 mol%, more preferably 99.9 mol%, further preferably 99.5 mol%, particularly preferably 99 mol%. When the content of LiPF₆ is at most the upper limit value, by relatively increasing the content of the compound (1), a non-aqueous electrolyte solution excellent in battery properties such as cycle properties and rate properties will be readily obtainable.

In a case where LiPF₆ is contained in the non-aqueous electrolyte solution of the present invention, the lower limit value for the total content of the compound (1) and LiPF₆ in the lithium salt is preferably 50 mol%, more preferably 80 mol%. The upper limit value for the total content of the compound (1) and LiPF₆ in the lithium salt is 100 mol%.

The content of the lithium salt in the non-aqueous electrolyte solution is not particularly limited and is preferably from 0.5 to 1.8 mol/L. The lower limit value for the content of the lithium salt is more preferably 0.8 mol/L. The upper limit value for the content of the lithium salt is more preferably 1.6 mol/L.

When calculated by mass%, the content of the lithium salt in the non-aqueous electrolyte solution is preferably from 5 mass% to 25 mass%. The lower limit value for the content of the lithium salt is more preferably 7 mass %, further preferably 8 mass%. The upper limit value for the content of the lithium salt is more preferably 20 mass%, further preferably 17 mass%.

When the content of the lithium salt is at least the lower limit value, a non-aqueous electrolyte solution having a high ion conductivity is obtainable. Further, when the content of the lithium salt is at most the upper limit value, the lithium salt is readily soluble uniformly in the liquid composition, and even under a low temperature condition, the lithium salt is less likely to be precipitated, whereby a highly practical electrolyte solution excellent in safety is readily obtainable.

The content of the compound (1) in the non-aqueous electrolyte solution of the present invention is preferably from 0.01 to 10 mass%. The lower limit value for the content of the compound (1) is more preferably 0.02 mass%, further preferably 0.1 mass%, particularly preferably 0.5 mass%. The upper limit value for the content of the compound (1) is more preferably 8 mass%, further preferably 5 mass%.

When the content of the compound (1) is at least the lower limit value, a non-aqueous electrolyte solution excellent in battery properties such as cycle properties and rate properties is readily obtainable. When the content of the compound (1) is at most the upper limit value, the lithium salt is readily soluble uniformly in the liquid composition, and even under a low temperature condition, the lithium salt is less likely to be precipitated, whereby a highly practical electrolyte solution excellent in safety is readily obtainable.

### [Fluorinated solvent (A)]

The fluorinated solvent (A) is a fluorinated solvent containing at least one member selected from the group consisting of a fluorinated ether compound, a fluorinated chain carboxylic acid ester compound and a fluorinated chain carbonate compound. The fluorinated solvent (A) is a solvent having fluorine atoms in its molecule and is excellent in flame retardance.

As the fluorinated solvent (A), one type may be used alone, or two or more types may be used in combination. When two or more types of the fluorinated solvent (A) are to be used, their ratio may optionally be set.

The fluorinated solvent (A) preferably contains a fluorinated ether compound. As such a fluorinated ether compound, at least one member selected from the group consisting of the following compound (2) and the following compound (3) is preferred.

As the fluorinated ether compound, one type may be used alone, or two or more types may be used in combination. When two or more types of the fluorinated ether compound are to be used, their ratio may optionally be set.

R²-O-R³ ··· (2)

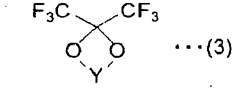

In the formula (2), each of R² and R³ which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₂₋₁₀ alkyl group having an etheric oxygen atom, or a C₂₋₁₀ fluorinated alkyl group having an etheric oxygen atom, provided that one or each of R² and R³ is a C₁₋₁₀ fluorinated alkyl group, a C₃₋₁₀ fluorinated cycloalkyl group or a C₂₋₁₀ fluorinated alkyl group having an etheric oxygen atom.

Further, in the formula (3), Y is a C₁₋₅ alkylene group, a C₁₋₅ fluorinated alkylene group, a C₂₋₅ alkylene group having an etheric oxygen atom, or a C₂-₅ fluorinated alkylene group having an etheric oxygen atom.

Each of the alkyl group and the alkyl group having an etheric oxygen atom may, for example, be a group having a straight chain structure, a branched structure or a partially cyclic structure (e.g. a cycloalkylalkyl group).

One or each of R² and R³ in the compound (2) is a C₁₋₁₀ fluorinated alkyl group, a C₃₋₁₀ fluorinated cycloalkyl group or a C₂₋₁₀ fluorinated alkyl group having an etheric oxygen atom. When one or each of R² and R³ is such a group, the solubility of the lithium salt in the non-aqueous electrolyte solution and the flame retardance of the non-aqueous electrolyte solution will be excellent. R² and R³ in the compound (2) may be the same or different.

The compound (2) is preferably a compound (2-A) wherein each of R² and R³ is a C₁₋₁₀ fluorinated alkyl group, a compound (2-B) wherein R² is a C₂₋₁₀ fluorinated alkyl group having an etheric oxygen atom and R³ is a C₁₋₁₀ fluorinated alkyl group, or a compound (2-C) wherein R² is a C₂₋₁₀ fluorinated alkyl group and R³ is a C₁₋₁₀ alkyl group, more preferably the compound (2-A) or the compound (2-C), particularly preferably the compound (2-A).

The total number of carbon atoms in the compound (2) is preferably from 4 to 10, more preferably from 4 to 8, since if it is too small, the boiling point will be too low, and if it is too large, the viscosity will be too high. The molecular weight of the compound (2) is preferably from 150 to 800, more preferably from 150 to 500, particularly preferably from 200 to 500. The number of etheric oxygen atoms in the compound (2) is influential over flammability. Therefore, the number of etheric oxygen atoms in the compound (2) having an etheric oxygen atom is preferably from 1 to 4, more preferably 1 or 2, particularly preferably 1. Further, when the fluorine content in the compound (2) is high, the flame retardance is excellent. Therefore, the fluorine content in the compound (2) is preferably at least 50 mass%, more preferably at least 60 mass%.

Here, the fluorine content is meant for the proportion of the total mass of fluorine atoms in the molecular weight.

The compound (2) is preferably a compound wherein each of R² and R³ is a partially fluorinated alkyl group having some of hydrogen atoms in an alkyl group fluorinated, since the solubility of the lithium salt in the liquid composition will be thereby excellent.

Especially, the compound (2) is preferably a compound wherein one or each of R² and R³ is -CF₂H.

Specific examples of the compound (2-A), the compound (2-B) and the fluorinated ether compound other than the compound (2-A) and the compound (2-B), may, for example, be compounds disclosed in WO2009/133899.

The compound (2) is preferably the compound (2-A), more preferably at least one member selected from the group consisting of CF₃ CH₂OCF₂CHF₂ (trade name: ASAHIKLlN AE-3000, manufactured by Asahi Glass Co., Ltd.), CF₃CH₂OCF₂CHFCF₃, CHF₂CF₂CH₂OCF₂CHF₂, CH₃CH₂CH₂OCF₂CHF₂, CH₃CH₂OCF₂CHF₂ and CHF₂CF₂CH₂OCF₂CHFCF₃, further preferably at least one member selected from the group consisting of CF₃CH₂OCF₂CHF₂, CHF₂CF₂CH₂OCF₂CHF₂ and CHF₂CF₂CH₂OCF₂CHFCF₃, particularly preferably at least one member selected from the group consisting of CF₃CH₂OCF₂CHF₂ and CHF₂CF₂CH₂OCF₂CHF₂.

In the compound (3), Y may have a straight chain structure or a branched structure. Y is preferably a C₁₋₅ alkylene group, more preferably a C₂₋₄ alkylene group. Such an alkylene group preferably has a straight chain structure or a branched structure. In a case where the alkylene group for Y has a branched structure, the side chain is preferably a C₁₋₃ alkyl group or a C₁₋₃ alkyl group having an etheric oxygen atom.

The compound (3) is preferably a compound of the formula (3) wherein Y is at least one member selected from the group consisting of -CH₂-, -CH₂CH₂ -, - CH(CH₃)CH₂ - and -CH₂CH₂CH₂-, more preferably at least one of a compound wherein Y is -CH₂CH₂- and a compound wherein Y is -CH(CH₃)CH₂-, further preferably either a compound wherein Y is -CH₂CH₂- or a compound wherein Y is -CH(CH₃)CH₂-.

Specific examples of the compound (3) may, for example, be the following compounds.

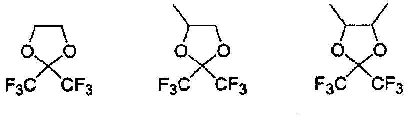

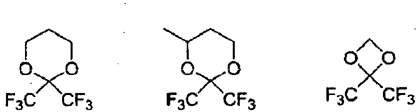

When the compound (2) and the compound (3) are the above-described compounds, the non-aqueous electrolyte solution will be capable of uniformly dissolving the lithium salt, will be excellent in flame retardance and will have high ion conductivity.

The fluorinated ether compound is preferably the compound (2) alone, the compound (3) alone, or a mixture of the compound (2) and the compound (3), more preferably the compound (2) alone or the compound (3) alone.

In a case where the non-aqueous electrolyte solution of the present invention contains the compound (2), the compound (2) may be one type alone, or two or more types in combination. Likewise, in a case where the non-aqueous electrolyte solution of the present invention contains the compound (3), the compound (3) may be one type alone, or two or more types in combination.

The fluorinated chain carboxylic acid ester compound is a chain compound which has no ring structure, has an ester bond and has fluorine atoms. Further, the fluorinated chain carbonate compound is a chain compound which has no ring structure, has a carbonate bond represented by -O-C(=O)-O- and has fluorine atoms.

The fluorinated chain carboxylic acid ester compound is preferably at least one member selected from the group consisting of the following compounds (4). 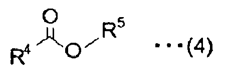 In the formula (4), each of R⁴ and R⁵ which are independent of each other, is a C₁₋₃ alkyl group or a C₁₋₃ fluorinated alkyl group, provided that one or each of R⁴ and R⁵ is a C₁₋₃ fluorinated alkyl group.

Each of the alkyl group and the fluorinated alkyl group may have a straight chain structure or a branched structure.

In the compound (4), one or each of R⁴ and R⁵ is a C₁₋₃ fluorinated alkyl group. When one or each of R⁴ and R⁵ is such a fluorinated alkyl group, the compound (4) is excellent in oxidation resistance and flame retardance. R⁴ and R⁵ in the compound (4) may be the same or different.

R⁴ is preferably a methyl group, an ethyl group, a difluoromethyl group, a trifluoromethyl group, a tetrafluoroethyl group or a pentafluoroethyl group, more preferably a difluoromethyl group or a trifluoromethyl group.

R⁵ is preferably a methyl group, an ethyl group, a trifluoromethyl group, a 2-fluoroethyl group, a 2,2-difluoroethyl group, or a 2,2,2-trifluoroethyl group, more preferably a methyl group, an ethyl group or a 2,2,2-trifluoroethyl group, particularly preferably a methyl group or an ethyl group.

The total number of carbon atoms in the compound (4) is preferably from 3 to 8, more preferably from 3 to 6, particularly preferably 3 to 5, since if it is too small, the boiling point tends to be too low, and if it is too large, the viscosity tends to be too high. The molecular weight of the compound (4) is preferably from 100 to 300, more preferably from 100 to 250, particularly preferably from 100 to 200. Further, the fluorine content in the compound (4) is preferably at least 25 mass%, more preferably at least 30 mass%, since the flame retardance will thereby be excellent.

Specific examples of the compound (4) may, for example, be (2,2,2-trifluoroethyl) acetate, methyl difluoroacetate, ethyl difluoroacetate, ethyl trifluoroacetate, etc. Among them, methyl difluoroacetate or ethyl trifluoroacetate is preferred from the viewpoint of availability and excellent battery performance such as cycle properties.

The fluorinated chain carboxylic acid ester compound may be one type alone, or two or more types in combination. In a case where the fluorinated chain carboxylic acid ester compound is two or more types in combination, their ratio may be optionally set.

In a case where the non-aqueous electrolyte solution of the present invention contains the compound (4), the compound (4) may be one type alone, or two or more types in combination.

The fluorinated chain carboxylic acid ester compound preferably contains the compound (4), more preferably consists solely of the compound (4).

The fluorinated chain carbonate compound is preferably at least one member selected from the group consisting of the following compounds (5). 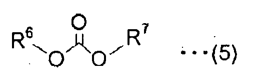 In the formula (5), each of R⁶ and R⁷ which are independent of each other, is a C₁₋₃ alkyl group or a C₁₋₃ fluorinated alkyl group, provided that one or each of R⁴ and R⁵ is a C₁₋₃ fluorinated alkyl group.

Each of the alkyl group and the fluorinated alkyl group may have a straight chain structure or a branched structure.

In the compound (5), one or each of R⁶ and R⁷ is a C₁₋₃ fluorinated alkyl group. When one or each of R⁶ and R⁷ is such a fluorinated alkyl group, the solubility of the lithium salt in the non-aqueous electrolyte solution and the flame retardance will be excellent. R⁶ and R⁷ in the compound (5) may be the same or different.

The compound (5) is preferably a compound wherein each of R⁶ and R⁷ is a C₁₋₃ fluorinated alkyl group.

As R⁶ and R⁷, CF₃ CH₂- or CHF₂ CF₂ CH₂- is preferred.

The total number of carbon atoms in the compound (5) is preferably from 4 to 10, more preferably from 4 to 7, since if it is too large, the viscosity tends to be too high. The molecular weight of the compound (5) is preferably from 180 to 400, more preferably from 200 to 350, particularly preferably from 210 to 300. Further, the fluorine content in the compound (5) is preferably at least 25 mass%, more preferably at least 30 mass%, since the flame retardance will thereby be excellent.

Specific examples of the compound (5) may, for example, be bis(2,2,2-trifluoroethyl) carbonate, bis(2,2,3,3-tetrafluoropropyl) carbonate, etc. Among them, bis(2,2,2-trifluoroethyl) carbonate is preferred from the viewpoint of the viscosity, availability and battery performance such as output properties.

The fluorinated chain carbonate compound may be one type alone, or two or more types in combination. In a case where the fluorinated chain carbonate compound is two or more types in combination, their ratio may be optionally set.

In a case where the non-aqueous electrolyte solution of the present invention contains the compound (5), the compound (5) may be one type alone, or two or more types in combination.

The fluorinated chain carbonate compound preferably contains the compound (5), more preferably consists solely of the compound (5).

The fluorinated solvent (A) may contain a fluorinated alkane compound as a fluorinated solvent other than the fluorinated ether compound, the fluorinated chain carboxylic acid ester compound and the fluorinated chain carbonate compound.

In a case where the non-aqueous electrolyte solution of the present invention contains such a fluorinated alkane compound, the non-aqueous electrolyte solution has its vapor pressure suppressed, whereby the flame retardance would be more improved. The fluorinated alkane compound is a compound having at least one of hydrogen atoms in an alkane substituted by a fluorine atom so that one or more hydrogen atoms remain. The fluorinated alkane compound is preferably a C₄₋₁₂ fluorinated alkane compound. When a fluorinated alkane compound having at least 4 carbon atoms is used, the vapor pressure of the non-aqueous electrolyte solution is low, and when a fluorinated alkane compound having at most 12 carbon atoms is used, the solubility of the lithium salt is good.

The fluorine content in the fluorinated alkane compound is preferably from 50 to 80 mass%. When the fluorine content in the fluorinated alkane compound is at least 50 mass%, the flame retardance is excellent. When the fluorine content in the fluorinated alkane compound is at most 80 mass%, the solubility of the lithium salt can easily be maintained.

The fluorinated alkane compound is preferably a compound having a straight chain structure and may, for example, be n-C₄F₉CH₂CH₃, n-C₆F₁₃CH₂CH₃, n-C₆F₁₃H or n-C₈F₁₇H. As such a fluorinated alkane compound, one type may be used alone, or two or more types may be used in combination.

In a case where the fluorinated ether compound and at least one member selected from the group consisting of the fluorinated chain carboxylic acid ester compound, the fluorinated chain carbonate compound and the fluorinated alkane compound, are to be used in combination, as the fluorinated compound (A), their ratio may optionally be set.

The content of the fluorinated solvent (A) in the non-aqueous electrolyte solution of the present invention is preferably from 30 to 80 mass%. The lower limit value for the content of the fluorinated solvent (A) is more preferably 45 mass%, further preferably 50 mass%, particularly preferably 55 mass%. Further, the upper limit value for the content of the fluorinated solvent (A) is more preferably 75 mass%, further preferably 73 mass%, particularly preferably 70 mass%.

When the content of the fluorinated solvent (A) is at least the lower limit value, the non-aqueous electrolyte solution is excellent in flame retardance, has low positive electrode reactivity and negative electrode reactivity, is less likely to undergo thermal runaway and has a high level of high voltage resistance property. When the content of the fluorinated solvent (A) is at most the upper limit value, the lithium salt can easily be uniformly dissolved, and the lithium salt is less likely to be precipitated at a low temperature, whereby ion conductivity is less likely to decrease.

The content of the fluorinated solvent (A) in the liquid composition is preferably from 45 to 90 mass%, more preferably from 50 to 85 mass%, further preferably from 55 to 80 mass%, particularly preferably from 60 to 75 mass%.

In a case where the fluorinated solvent (A) contains the fluorinated ether compound, the content of the fluorinated ether compound in the fluorinated solvent (A) is preferably from 25 to 100 mass%. The lower limit value for the content of the fluorinated ether compound is more preferably 30 mass%, further preferably 50 mass%, particularly preferably 60 mass%, most preferably 70 mass%.

It is particularly preferred that the fluorinated solvent (A) contains the fluorinated ether compound. The proportion of the mass of the fluorinated ether compound to the total mass of the fluorinated solvent (α) is preferably from 25 to 100 mass%, more preferably from 30 to 100 mass%, further preferably from 50 to 100 mass%, still further preferably from 60 to 100 mass%, particularly preferably from 70 to 100 mass%. Most preferably, the fluorinated solvent (α) consists solely of the fluorinated ether compound. When the proportion of the mass of the fluorinated ether compound to the total mass of the fluorinated solvent (α) is at least the lower limit value, the flame retardance of the non-aqueous electrolyte solution is easily obtainable, and it becomes easy to improve the safety of the battery.

In a case where the fluorinated solvent (A) in the non-aqueous electrolyte solution of the present invention contains the fluorinated ether compound, the content of the fluorinated ether compound in the non-aqueous electrolyte solution of the present invention is preferably from 10 to 80 mass%. The lower limit value for the content of the fluorinated ether compound is more preferably 20 mass%, further preferably 30 mass%, particularly preferably 45 mass%, most preferably 50 mass%. Further, the upper limit value for the content of the fluorinated ether compound is more preferably 75 mass%, further preferably 73 mass%, particularly preferably 70 mass%.

When the proportion of the mass of the fluorinated ether compound to the total mass of the non-aqueous electrolyte solution is at least the lower limit value, the flame retardance of the non-aqueous electrolyte solution is readily obtainable, and it becomes easy to improve the safety of the battery. When the proportion of the mass of the fluorinated ether compound to the total mass of the non-aqueous electrolyte solution is at most the upper limit value, the solubility of the lithium salt can easily be increased, and a non-aqueous electrolyte solution excellent in conductivity and excellent also in cycle properties and output properties, is readily obtainable.

In a case where the fluorinated solvent (A) contains the fluorinated chain carboxylic acid ester compound, the content of the fluorinated chain carboxylic acid ester compound in the fluorinated solvent (A) is preferably from 0.01 to 50 mass%. The upper limit value for the content of the fluorinated chain carboxylic acid ester compound is more preferably 40 mass%, further preferably 30 mass%, particularly preferably 20 mass%.

In a case where the fluorinated solvent (A) contains the fluorinated chain carbonate compound, the content of the fluorinated chain carbonate compound in the fluorinated solvent (A) is preferably from 0.01 to 50 mass%. The upper limit value for the content of the fluorinated chain carbonate compound is more preferably 40 mass%, further preferably 30 mass%, particularly preferably 20 mass%.

In a case where the fluorinated solvent (A) in the non-aqueous electrolyte solution of the present invention contains the fluorinated alkane compound, the content of the fluorinated alkane compound in the non-aqueous electrolyte solution is preferably from 0.01 to 5 mass%. When the content of the fluorinated alkane compound is at least 0.01 mass%, the vapor pressure is low, and the flame retardance is excellent. When the content of the fluorinated alkane compound is at most 5 mass%, the solubility of the lithium salt can easily be maintained.

### [Cyclic carboxylic acid ester compound (B)]

By the cyclic carboxylic acid ester compound (B), the lithium salt is uniformly dissolved in the fluorinated solvent (A). Further, in the present invention, by using the cyclic carboxylic acid ester compound (B), the non-aqueous electrolyte solution is made less reactive with the positive electrode and the negative electrode, and thermal runaway in the secondary battery is made less likely to occur.

The cyclic carboxylic acid ester compound (B) is a cyclic compound having an ester bond in its molecule. The cyclic carboxylic acid ester compound (B) is preferably a saturated cyclic carboxylic acid ester compound containing no carbon-carbon unsaturated bond in its molecule.

The ring structure in the cyclic carboxylic acid ester compound (B) is preferably a 4- to 10-membered ring, more preferably a 4- to 7-membered ring, and from the viewpoint of availability, a 5- or 6-membered ring is further preferred, and a 5-membered ring is particularly preferred.

Further, from the viewpoint of availability, the total number of carbon atoms in the cyclic carboxylic acid ester compound is preferably from 4 to 8, more preferably 4 to 6. Further, the cyclic carboxylic acid ester is preferably composed solely of carbon atoms, hydrogen atoms and oxygen atoms, and more preferably, the portion other than the ester bond represented by a -C(=O)-O- bond contained in the ring structure, is composed solely of carbon atoms and hydrogen atoms.

The ring structure of the cyclic carboxylic acid ester compound (B) is preferably a ring structure having a straight chain alkylene group and one ester bond linking both terminals of the straight chain alkylene group. Further, the cyclic carboxylic acid ester compound (B) may be a compound having at least one of hydrogen atoms in the straight chain alkylene group substituted by a substituent. The substituent may, for example, be a fluorine atom, a chlorine atom, an alkyl group, a fluorinated alkyl group or the like. The number of carbon atoms in the alkyl group is preferably 1 or 2, and the number of carbon atoms in the fluorinated alkyl group is preferably 1 or 2.

The cyclic carboxylic acid ester compound is preferably at least one member selected from the group consisting of the following compounds (6). 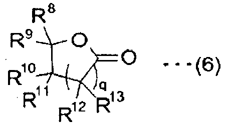 In the formula (6), each of R⁸ to R¹³ which are independent of each other, is a hydrogen atom, a fluorine atom, a chlorine atom, a C₁₋₂ alkyl group, a C₁₋₂ fluorinated alkyl group, or a C₂₋₃ alkyl group having an etheric oxygen atom, and q is an integer of from 0 to 3.

In the formula (6), R⁸ to R¹³ may be the same or different.

Further, as R⁸ to R¹³, a hydrogen atom, a methyl group or a fluorine atom is preferred, and a hydrogen atom, a methyl group or an ethyl group is more preferred.

q is preferably 1 or 2, more preferably 1.

The compound (6) may, for example, be a cyclic ester compound such as γ-butyrolactone, γ-valerolactone, γ-hexanolactone, δ-valerolactone or ε-caprolactone, or a compound having at least one of hydrogen atoms bonded to carbon atoms forming the ring of such a cyclic ester compound substituted by a fluorine atom, a chlorine atom, a C₁₋₂ alkyl group, a C₁₋₂ fluorinated alkyl group or a C₂₋₃ alkyl group having an etheric oxygen atom. Among them, at least one member selected from the group consisting of γ-butyrolactone and y-valerolactone, is preferred, and y-butyrolactone is more preferred, from the viewpoint of availability and since the effect to prevent thermal runaway is high.

The cyclic carboxylic acid ester compound (B) may be one type only, or two or more types in combination.

Further, the cyclic carboxylic acid ester compound (B) preferably contains the compound (6) and more preferably consists solely of the compound (6).

The content of the cyclic carboxylic acid ester compound (B) in the non-aqueous electrolyte solution of the present invention is preferably from 4 to 60 mass%. The lower limit value for the content of the cyclic carboxylic acid ester compound (B) is more preferably 7 mass%, further preferably 10 mass%, particularly preferably 15 mass%. The upper limit value for the content of the cyclic carboxylic acid ester compound (B) is more preferably 45 mass%, further preferably 40 mass%, particularly preferably 35 mass%.

When the content of the cyclic carboxylic acid ester compound (B) is at least the lower limit value, the non-aqueous electrolyte solution tends to uniformly dissolve the lithium salt, and it becomes possible to readily obtain a non-aqueous electrolyte solution excellent in conductivity and excellent also in cycle properties and output properties. Further, when the content of the cyclic carboxylic acid ester compound (B) is at most the upper limit value, the non-aqueous electrolyte solution is excellent in flame retardance, and the reactivity of the non-aqueous electrolyte solution with the positive electrode and the negative electrode is low, whereby thermal runaway is less likely to occur. Further, it becomes possible to use the fluorinated solvent in a larger amount, whereby the flame retardance of the electrolyte solution may be readily improved.

In the non-aqueous electrolyte solution of the present invention, N_{B}/N_{Li}, i.e. the ratio of the total number of moles (N_{B}) of the cyclic carboxylic acid ester compound (B) to the total number of moles (N_{Li}) of lithium atoms derived from the lithium salt, is preferably from 1.5 to 8.0. The lower limit value for such N_{B}/N_{Li} is more preferably 2, further preferably 2.5, particularly preferably 3. Further, the upper limit value for such N_{B}/N_{Li} is more preferably 7, further preferably 6.5, particularly preferably 6.

When such N_{B}/N_{Li} is at least the lower limit value, the non-aqueous electrolyte solution tends to uniformly dissolve the lithium salt. Further, when such N_{B}/N_{Li} is at most the upper limit value, the non-aqueous electrolyte solution is excellent in flame retardance, and the reactivity of the non-aqueous electrolyte solution with the positive electrode and the negative electrode is low, whereby thermal runaway is less likely to occur. Further, it becomes possible to use the fluorinated solvent in a larger amount, whereby the flame retardance of the electrolyte solution may be readily improved.

### [Other solvents]

The liquid composition in the non-aqueous electrolyte solution of the present invention may contain other solvents in addition to the fluorinated solvent (A) and the cyclic carboxylic acid ester compound (B). As such other solvents, at least one compound (C) selected from the group consisting of a cyclic carbonate compound, a chain carbonate compound having no fluorine atom (hereinafter referred to also as a "non-fluorinated chain carbonate compound"), and a chain carboxylic acid ester compound having no fluorine atom (hereinafter referred to also as a "non-fluorinated chain carboxylic acid ester compound"), is preferred, whereby the non-aqueous electrolyte solution is excellent in the solubility of the lithium salt, ion conductivity and battery properties such as cycle properties and output properties.

The cyclic carbonate compound is a compound having a ring structure, of which the ring skeleton is composed of carbon atoms and oxygen atoms, and wherein the ring structure has a carbonate bond represented by -O-C(=O)-O-.

The cyclic carbonate compound may, for example, be a saturated cyclic carbonate compound (such as propylene carbonate, ethylene carbonate or 4-fluoro-1,3-dioxolan-2-one), or an unsaturated cyclic carbonate compound (such as dimethyl vinylene carbonate, vinylene carbonate, vinyl ethylene carbonate (4-vinyl-1,3-dioxolan-2-one), 3-methyl-4-vinyl ethylene carbonate, 4,5-divinyl ethylene carbonate or 4,5-bis(2-methyl vinyl)ethylene carbonate). Further, the cyclic carbonate compound may be a fluorinated cyclic carbonate compound such as 4-fluoro-1,3-dioxolan-2-one (fluoroethylene carbonate) or 4,5-difluoro-1,3-dioxolan-2-one (difluoroethylene carbonate).

The non-fluorinated chain carbonate compound is a chain compound having no ring structure, has a carbonate bond represented by -0-C(=0)-0- and has no fluorine atom.

The non-fluorinated chain carbonate compound may, for example, be dimethyl carbonate (DMC), ethylmethyl carbonate (EMC) or diethyl carbonate (DEC).

The non-fluorinated chain carboxylic acid ester compound is a chain compound having no ring structure, has an ester bond and has no fluorine atom.

The non-fluorinated chain carboxylic acid ester compound may, for example, be ethyl propionate, methyl propionate or ethyl acetate.

The non-aqueous electrolyte solution of the present invention may not contain other solvents, but in a case where it contains other solvents, the upper limit for the content of other solvents in the non-aqueous electrolyte solution is preferably 30 mass%, more preferably 20 mass%, further preferably 15 mass%, particularly preferably less than 10 mass%. The lower limit value for the content of such other solvents is 0 mass%. When the content of such other solvents is at most the upper limit value, the reaction of other solvents with the charging electrodes can easily be prevented, and it is possible to obtain an electrolyte solution excellent in stability. Further, it is possible to easily increase the content of the fluorinated solvent (A), whereby a non-aqueous electrolyte solution excellent in flame retardance is readily obtainable.

In a case where the non-aqueous electrolyte solution of the present invention contains the compound (C), the upper limit value for the content of the compound (C) in the non-aqueous electrolyte solution is preferably 30 mass%, more preferably 20 mass%, further preferably 15 mass%, particularly preferably less than 10 mass%.

Further, in a case where the non-aqueous electrolyte solution of the present invention contains the compound (C), (N_{B}+N_{C})/N_{Li} i.e. the ratio of the sum of the total number of moles (N_{B}) of the cyclic carboxylic acid ester compound (B) and the total number of moles (Nc) of the compound (C), to the total number of moles (N_{Li}) of lithium atoms derived from the lithium salt, is preferably 3 to 8. The lower limit value for such (N_{B}+N_{C})/NLi is more preferably 3.2, further preferably 3.5. Further, the upper limit value for such (N_{B}+N_{C})/N_{Li} is more preferably 7.5, further preferably 7, particularly preferably 6.5, most preferably 6.

When such (N_{B}+N_{C})/NLi is at least the lower limit value, it becomes easy to dissolve the lithium salt in the fluorinated solvent (A), and it becomes easy to increase the conductivity, whereby an electrolyte solution excellent in battery properties is readily obtainable. When such (N_{B}+N_{C})/N_{Li} is at most the upper limit value, the reactivity of the non-aqueous electrolyte solution with the positive electrode and the negative electrode becomes low, whereby thermal runaway of the secondary battery becomes less likely to occur. Further, it becomes possible to use the fluorinated solvent in a large amount, whereby it becomes easy to improve the flame retardance of the electrolyte solution.

The content of the cyclic carbonate compound in the non-aqueous electrolyte solution of the present invention is preferably at most 20 mass%, more preferably at most 15 mass%, further preferably less than 10 mass%, particularly preferably at most 5 mass%, most preferably at most 3 mass%.

In a case where the non-aqueous electrolyte solution of the present invention contains the cyclic carbonate compound, the content of the cyclic carbonate compound in the non-aqueous electrolyte solution is preferably from 0.01 to 20 mass%, more preferably from 0.01 to 15 mass%, further preferably at least 0.01 mass% and less than 10 mass%, particularly preferably from 0.01 to 5 mass%, most preferably from 0.01 to 3 mass%. When the content of the cyclic carbonate compound is at most the upper limit value, the cyclic carbonate compound is less likely to react with the charging electrodes, and the non-aqueous electrolyte solution is excellent in stability and flame retardance.

The content of the non-fluorinated chain carbonate compound in the non-aqueous electrolyte solution of the present invention is preferably at most 20 mass%, more preferably at most 15 mass%, further preferably less than 10 mass%.

In a case where the non-aqueous electrolyte solution of the present invention contains the non-fluorinated chain carbonate compound, the content of the non-fluorinated chain carbonate compound in the non-aqueous electrolyte solution is preferably from 0.01 to 20 mass%, more preferably from 0.01 to 15 mass%, further preferably at least 0.01 mass% and less than 10 mass%, for the same reason as in the case of the non-fluorinated cyclic carbonate compound.

The content of the non-fluorinated chain carboxylic acid ester compound in the non-aqueous electrolyte solution of the present invention is preferably at most 20 mass%, more preferably at most 15 mass%, further preferably less than 10 mass%.

In a case where the non-aqueous electrolyte solution of the present invention contains the non-fluorinated chain carboxylic acid ester compound, the content of the non-fluorinated chain carboxylic acid ester compound in the non-aqueous electrolyte solution is preferably from 0.01 to 20 mass%, more preferably from 0.01 to 15 mass%, further preferably at least 0.01 mass% and less than 10 mass%, for the same reason as in the case of the non-fluorinated cyclic carbonate compound.

Further, the proportion of the mass of the cyclic carboxylic acid ester compound (B) to the total mass of the cyclic carboxylic acid ester compound (B) and the compound (C) is preferably from 40 to 100 mass%. The lower limit value for the proportion of the cyclic carboxylic acid ester compound (B) is preferably 50 mass%, more preferably 60 mass%, further preferably 70 mass%, particularly preferably 80 mass%.

Further, in the present invention, the liquid composition preferably does not contain a nitrile compound such as acetonitrile and an ether compound having no fluorine atom, such as monoglyme (1,2-dimethoxyethane), whereby it is readily possible to obtain a non-aqueous electrolyte solution, of which the reactivity with the positive electrode and the negative electrode is lower and which is less likely to cause thermal runaway.

The content of a nitrile compound in the non-aqueous electrolyte solution of the present invention is preferably at most 10 mass%, more preferably at most 5 mass%, further preferably at most 3 mass%.

The content of an ether compound having no fluorine atom in the non-aqueous electrolyte solution of the present invention is preferably at most 10 mass%, more preferably at most 5 mass%, further preferably at most 3 mass%, particularly preferably at most 1 mass%.

### [Other components]

To the non-aqueous electrolyte solution of the present invention, other components may be incorporated as the case requires, in order to improve the functions of the non-aqueous electrolyte solution. Such other components may, for example, be known overcharge-preventing agents, dehydrating agents, deoxidizing agents, property-improving assistants to improve the cycle properties and capacity-maintaining properties after high temperature storage, surfactants to help impregnation of the non-aqueous electrolyte solution to the electrode assembly or to a separator, etc.

The overcharge-preventing agents may, for example, be an aromatic compound such as biphenyl, an alkyl biphenyl, terphenyl, a partially hydrated product of terphenyl, cyclohexylbenzene, t-butylbenzene, t-amylbenzene, diphenyl ether or dibenzofuran; a partially fluorinated product of such an aromatic compound, such as 2-fluorobiphenyl, o-cyclohexylfluorobenzene or p-cyclohexylfluorobenzene; and a fluorinated anisole compound such as 2,4-difluoroanisole, 2,5-difluoroanisole or 2,6-difluoroanisole. As the overcharge-preventing agent, one type may be used alone, or two or more types may be used in combination.

In a case where the non-aqueous electrolyte solution contains an overcharge-preventing agent, the content of the overcharge-preventing agent in the non-aqueous electrolyte solution is preferably from 0.01 to 5 mass%. By incorporating at least 0.01 mass% of the overcharge-preventing agent to the non-aqueous electrolyte solution, it becomes easier to prevent breakage or ignition of the secondary battery by overcharge, whereby the secondary battery can be used more safely.

The dehydrating agents may, for example, be molecular sieves, sodium sulfate, magnesium sulfate, calcium hydride, sodium hydride, potassium hydride, lithium aluminum hydride, etc. The solvent to be used for the non-aqueous electrolyte solution of the present invention is preferably one which has been subjected to dehydration with such a dehydrating agent, followed by rectification. Otherwise, a solvent which has been subjected only to dehydration with such a dehydrating agent without being subjected to rectification, may be used.

The property-improving assistants to improve the cycle properties and capacity-maintaining properties after high temperature storage, may, for example, be a sulfur-containing compound such as ethylene sulfite, 1,3-propane sultone, 1,4-butane sultone, methyl methanesulfonate, busulfan, sulfolene, dimethylsulfone, diphenylsulfone, methylphenylsulfone, dibutyl disulfide, dicyclohexyl disulfide, tetramethylthiuram monosulfide, N,N-dimethylmethane sulfonamide or N,N-diethylmethane sulfonamide; a hydrocarbon compound such as heptane, octane or cycloheptane; and a fluorinated aromatic compound such as fluorobenzene, difluorobenzene or hexafluorobenzene. As the property-improving assistant, one type may be used alone, or two or more types may be used in combination.

In a case where the non-aqueous electrolyte solution contains a property-improving assistant, the content of the property-improving assistant in the non-aqueous electrolyte solution is preferably from 0.01 to 5 mass%.

The surfactants may be cationic surfactants, anionic surfactants, non-ionic surfactants or amphoteric surfactants, but anionic surfactants are preferred, since they are readily available and their surface activities are high. Further, as the surfactants, fluorinated surfactants are preferred, since their oxidizing resistance is high, and their cycle properties and rate properties are good.

As the anionic fluorinated surfactant, the following compound (8-1) or compound (8-2) is preferred.

R¹⁴COO^{⊖}M^{1⊕} ... (8-1)

R¹⁵SO₃^{⊖}M^{2⊕} ... (8-2)

In the formulae, each of R¹⁴ and R¹⁵ which are independent of each other, is a C₄₋₂₀ perfluoroalkyl group, or a C₄₋₂₀ perfluoroalkyl group having an etheric oxygen atom.

Each of M¹ and M² which are independent of each other, is an alkali metal or NH(R¹⁶)₃ (R¹⁶ is a hydrogen atom or a C₁₋₈ alkyl group, and they may be the same groups or different groups).

Each of R¹⁴ and R¹⁵ is preferably a C₄₋₂₀ perfluoroalkyl group, or a C₄₋₂₀ perfluoroalkyl group having an etheric oxygen atom, since the degree of decreasing the surface tension of the non-aqueous electrolyte solution is thereby good, more preferably a C₄₋₈ perfluoroalkyl group, or a C₄₋₈ perfluoroalkyl group having an etheric oxygen atom, from the viewpoint of the solubility and environmental accumulation.

The structure of R¹⁴ and R¹⁵ may be a straight chain structure or a branched structure, and may contain a ring structure. The structure of R¹⁴ and R¹⁵ is preferably a straight chain structure from the viewpoint of availability and good surface active effects.

The alkali metal for M¹ and M² is preferably Li, Na or K. As M¹ and M², NH⁴⁺ is particularly preferred.

Specific examples of the compound (8-1) may, for example, be fluorinated carboxylic acid salts, such as , C₄F₉COO⁻NH₄⁺ , C₅F₁₁COO⁻NH₄⁺, C₆F₁₃COO⁻NH₄⁺, C₅F₁₁COO⁻NH(CH₃)₃⁺, C₆F₁₃COO⁻NH(CH₃)₃⁺, C₄F₉COO⁻Li⁺, C₅F₁₁COO⁻Li⁺, C₆F₁₃COO⁻Li⁺, C₃F₇OCF(CF₃)COO⁻NH₄⁺, C₃F₇OCF(CF₃)CF₂OCF(CF₃)COO⁻ NH₄⁺, C₃F₇OCF(CF₃)COO⁻NH(CH₃)₃⁺, C₃F₇OCF(CF₃)CF₂OCF(CF₃)COO⁻ NH(CH₃)₃⁺, C₃F₇OCF(CF₃)COO⁻Li⁺, C₂F₅OC₂F₄OCF₂COO⁻Li⁺, C₂F₅OC₂F₄OCF₂COO⁻NH₄⁺, C₃F₇OCF(CF₃)CF₂OCF(CF₃)COO⁻Li⁺, etc.

Among them, C₅F₁₁COO⁻NH₄⁺, C₅F₁₁COO⁻Li⁺, C₆F₁₃COO⁻Li⁺, C₃F₇OCF(CF₃)COO⁻NH₄⁺, C₃F₇OCF(CF₃)CF₂OCF(CF₃)COO⁻NH₄⁺, C₃F₇OCF(CF₃)COO⁻Li⁺, C₃F₇OCF(CF₃)CF₂OCF(CF₃)COO⁻Li⁺, C₂F₅OC₂F₄OCF₂COO⁻Li⁺ or C₂F₅OC₂F₄OCF₂COO-NH₄⁺, is preferred, since the solubility in the non-aqueous electrolyte solution and the effect to lower the surface tension, are good.

Specific examples of the compound (8-2) may, for example, be fluorinated sulfonic acid salts, such as C₄F₉SO₃⁻NH₄⁺, C₅F₁₁SO₃⁻NH4⁺, C₆F₁₃SO₃NH₄⁺, C₄F₉SO₃⁻ NH(CH₃)₃⁺, C₅F₁₁SO3⁻NH(CH₃)₃⁺, C₆F₁₃SO₃⁻NH(CH₃)₃⁺, C₄F₉SO₃⁻Li⁺, C₅F₁₁SO₃⁻Li⁺, C₆F₁₃SO₃⁻Li⁺, C₃F₇OCF(CF₃)CF₂OC(CF₃)FSO₃⁻NH₄⁺, C₃F₇OCF(CF₃)CF₂OCF(CF₃)CF₂OCF(CF₃)SO₃⁻NH₄⁺, HCF₂CF₂OCF₂CF₂SO₃⁻ NH₄⁺, CF₃CFHCF₂OCF₂CF₂SO₃⁻NH4⁺, C₃F₇OC(CF₃)FSO₃⁻NH₄⁺, C₃F₇OCF(CF₃)CF₂OC(CF₃)FSO₃⁻NH(CH₃)₃⁺, C₃F₇OCF(CF₃)CF₂OCF(CF₃)CF₂OCF(CF₃)SO₃⁻NH(CH₃)₃⁺, HCF₂CF₂OCF₂CF₂SO⁻NH(CH₃)₃⁺, CF₃CFHCF₂OCF₂CF₂SO₃⁻NH(CH₃)₃⁺, C₃F₇OCF(CF₃)SO₃⁻NH(CH₃)₃⁺, C₃F₇OCF(CF₃)CF₂OC(CF₃)FSO₃⁻Li⁺, C₃F₇OCF(CF₃)CF₂OC(CF₃)FCF₂OCF(CF₃)SO₃⁻Li⁺, HCF₂CF₂OCF₂CF₂SO₃⁻Li⁺, CF₃CFHCF₂OCF₂CF₂SO₃⁻Li⁺, C₃F₇OCF(CF₃)SO₃⁻Li⁺, etc.

Among them, C₄F₉SO₃⁻NH₄⁺, C₆F₁₃SO₃⁻NH₄⁺, C₄F₉SO₃⁻Li⁺, C₆F₁₃SO₃⁻Li⁺, C₈F₁₇SO₃⁻Li⁺, C₃F₇OCF(CF₃)CF₂OCF(CF₃)SO₃⁻NH₄⁺, C₃F₇OCF(CF₃)CF₂OCF(CF₃)SO₃⁻Li⁺, C₃F₇OCF(CF₃)SO₃⁻NH₄⁺ or C₃F₇OCF(CF₃)SO₃⁻Li⁺, is preferred, since the solubility in the non-aqueous electrolyte solution and the effect to lower the surface tension, are good.

In a case where the liquid composition contains a surfactant, the surfactant may be one type alone, or two or more types in combination.

In a case where the non-aqueous electrolyte solution of the present invention contains a surfactant, the upper limit value for the content of the surfactant in the non-aqueous electrolyte solution is preferably 5 mass%, more preferably 3 mass%, further preferably 2 mass%. Further, the lower limit value is preferably 0.05 mass%.

The lower limit value for the ion conductivity at 25°C of the non-aqueous electrolyte solution of the present invention is preferably 0.30 S/m. A secondary battery using an electrolyte solution, of which the ion conductivity at 25°C is less than 0.30 S/m, is inferior in battery properties and thus is poor in practical applicability. When the ion conductivity at 25°C of the non-aqueous electrolyte solution is at least 0.30 S/m, the secondary battery will be excellent in battery properties.

### [Preferred composition of non-aqueous electrolyte solution]

The non-aqueous electrolyte solution of the present invention preferably has the following composition 1 to provide the effects intended by the present invention.

### (Composition 1)

A non-aqueous electrolyte solution comprising a lithium salt containing compound (1) and LiPF₆, at least one fluorinated solvent (A) selected from the group consisting of compounds (2) to (5), and compound (6).

Further, composition 2 is more preferred.

### (Composition 2)

A non-aqueous electrolyte solution comprising
a lithium salt containing compound (1) and LiPF₆,
at least one member selected from the group consisting of CF₃CH₂OCF₂CHF₂, CF₃CH₂OCF₂CHFCF₃, CHF₂CF₂CH₂OCF₂CHF₂, CH₃CH₂CH₂OCF₂. CH₃CH₂OCF₂CHF₂, CHF₂CF₂CH₂OCF₂CHFCF₃, a compound represented by the above formula (3) wherein Y is CH₂CH₂, and a compound represented by the above formula (3) wherein Y is CH(CH₃)CH₂, and
at least one member selected from the group consisting of y-butyrolactone and γ-valerolactone.

Further, composition 3 is particularly preferred.

### (Composition 3)

A non-aqueous electrolyte solution comprising compound (1) and LiPF₆, at least one member selected from the group consisting of CF₃CH₂OCF₂CHF₂ and CHF₂CF₂CH₂OCF₂CHFCF₃, and at least one member selected from the group consisting of y-butyrolactone and y-valerolactone.

The non-aqueous electrolyte solution of the present invention as described above, contains a cyclic carboxylic acid ester compound (B), whereby the reactivity with the positive electrode and the negative electrode is low, so that it is possible to sufficiently prevent thermal runaway of the secondary battery, and the stability is good. Further, the non-aqueous electrolyte solution of the present invention contains compound (1) as a lithium salt, whereby, while maintaining good stability, it is excellent in battery properties such as cycle properties and rate properties.

### <Lithium ion secondary battery>

The lithium ion secondary battery of the present invention is a secondary battery comprising a positive electrode, a negative electrode and the non-aqueous electrolyte solution of the present invention.

### [Positive electrode]

The positive electrode may be an electrode wherein a positive electrode layer containing a positive electrode active material, a conductivity-imparting agent and a binder, is formed on a current collector.

The positive electrode active material may be any material so long as it is capable of absorbing and desorbing lithium ions, and a positive electrode active material for conventional lithium ion secondary batteries may be employed. For example, a lithium-containing transition metal oxide, a lithium-containing transition metal composite oxide using at least two transition metals, a transition metal oxide, a transition metal sulfide, a metal oxide or an olivine type metal lithium salt may be mentioned.

The lithium-containing transition metal oxide may, for example, be lithium cobalt oxide such as LiCoO₂, lithium nickel oxide such as LiNiO₂ or lithium manganese oxide such as LiMnO₂ , LiMn₂ O₄, Li₂ MnO₃.

As a metal for the lithium-containing transition metal composite oxide, Al, V, Ti, Cr, Mn, Fe, Co, Li, Ni, Cu, Zn, Mg, Ga, Zr, Si or Yb is, for example, preferred. The lithium-containing transition metal composite oxide may, for example, be a lithium ternary composite oxide such as Li(NiₐCo_{b}Mn_{c})O2 (wherein a, b, c≧0, a+b+c=1) or one having a part of the transition metal atom which mainly constitutes such a lithium transition metal composite oxide substituted by another metal such as Al, Ti, V, Cr, Mn, Fe, Co, Li, Ni, Cu, Zn, Mg, Ga, Zr, Si or Yb. For example, LiMn_{0.5}Ni_{0.5}O_{2,} LiMn_{1.8}Al_{0.2}O₄, LiNi_{0.85}Co_{0.10}Al_{0.05}O₂, LiMn_{1.5}Ni_{0.5}O₄ or LiNi_{1/3}Co_{1/3}Mm_{1/3}O₂ may be mentioned.

The transition metal oxide may, for example, be TiO₂, MnO₂, MoO₃, V₂ O₅, V₆ O₁₃. The transition metal sulfide may, for example, be TiS₂, FeS or MoS₂. The metal oxide may, for example, be SnO₂ or SiO₂.

The olivine type metal lithium salt is a substance represented by the formula Li_{L}M³xM⁴_{y}O_{z}F_{g} (wherein M³ is Fe(II), Co(II), Mn(II), Ni(II), V(II) or Cu(II), M⁴ is P or Si, and L, x, y, z and g are, respectively, 0≦L≦3, 1≦x≦2, 1≦y≦3, 4≦z≦12 and 0≦g≦1) or a composite thereof. For example, LiFePO₄, Li₃Fe₂(PO₄)₃, LiFeP₂O₇, LiMnPO_{4,} LiNiPO₄, LiCoPO₄, Li₂FePO₄F, Li₂MnPO₄F, Li₂NiPO₄F, Li₂CoPO₄F, Li₂FeSiO₄, Li₂MnSiO₄, Li₂NiSiO4 or Lᵢ₂CoSᵢO4 may be mentioned.

These positive electrode active materials may be used alone or in combination as a mixture of two or more of them.

Further, such a positive electrode active material having on its surface an attached substance having a composition different from the substance constituting the positive electrode active material as the main component may also be used. The surface-attached substance may, for example, be an oxide such as aluminum oxide, silicon oxide, titanium oxide, zirconium oxide, magnesium oxide, calcium oxide, boron oxide, antimony oxide or bismuth oxide; a sulfate such as lithium sulfate, sodium sulfate, potassium sulfate, magnesium sulfate, calcium sulfate or aluminum sulfate; or a carbonate such as lithium carbonate, calcium carbonate or magnesium carbonate.

With regard to the amount of the surface-attached substance, the lower limit of the mass to the positive electrode active material is preferably 0.1 mass ppm, more preferably 1 mass ppm, further preferably 10 mass ppm. The upper limit is preferably 20 mass%, more preferably 10 mass%, further preferably 5 mass%. By the surface-attached substance, it is possible to suppress an oxidation reaction of the non-aqueous electrolyte solution at the surface of the positive electrode active material and thereby to improve the battery life.

The positive electrode active material is preferably a lithium-containing transition metal oxide having an α-NaCrO₂ structure as matrix, such as LiCoO₂, LiNiO₂ or LiMnO₂, or a lithium-containing transition metal oxide having a spinel structure as matrix, such as LiMn₂O₄, since its discharge voltage is high and its electrochemical stability is high.

The conductivity-imparting agent may, for example, be a metal material such as Al or a powder of a conductive oxide, in addition to a carbon material.

The binder may, for example, be a resin binder such as polyvinylidene fluoride, or a rubber binder such as hydrocarbon rubber or fluorinated rubber.

The current collector may be a thin metal film composed mainly of e.g. Al.

### [Negative electrode]

The negative electrode may be an electrode wherein a negative electrode layer containing a negative electrode active material, a conductivity-imparting agent and a binder, is formed on a current collector.

The negative electrode active material may be at least one member selected from the group consisting of lithium metal, a lithium alloy and a carbon material capable of absorbing and desorbing lithium ions.

The carbon material may, for example, be graphite, coke or hard carbon.

The lithium alloy may, for example, be a Li-Si alloy, a Li-Al alloy, a Li-Pb alloy or a Li-Sn alloy.

As the binder and conductivity-imparting agent for the negative electrode, ones equal to those for the positive electrode may be used.

Further, in a case where the negative electrode active material can maintain the shape by itself (e.g. a thin lithium metal film), the negative electrode may be formed solely of the negative electrode active material.

Between the positive electrode and the negative electrode, a separator is usually interposed in order to prevent short circuiting. Such a separator may, for example, be a porous film. In such a case, the non-aqueous electrolyte solution is used as impregnated to the porous film. Further, such a porous film having the non-aqueous electrolyte solution impregnated and gelated, may be used as a gel electrolyte.

As the porous film, one which is stable against the non-aqueous electrolyte solution and is excellent in the liquid-maintaining property, may be used. Preferred is a porous sheet or a non-woven fabric made of a fluororesin such as polyvinylidene fluoride, polytetrafluoroethylene or a copolymer of ethylene and tetrafluoroethylene, a polyimide, or a polyolefin such as polyethylene or polypropylene. The material for the porous film is more preferably a polyolefin such as polyethylene or polypropylene. Further, such materials may be laminated to have a two-layered or three-layered structure.

On the surface of the separator and/or the electrode, a fine inorganic particle layer may be provided in order to improve the heat resistance or shape-maintaining property. As such fine inorganic particles, silica, alumina, titania, magnesia, etc. may, for example, be mentioned.

The material for a battery exterior package to be used for the lithium ion secondary battery of the present invention may, for example, be nickel-plated iron, stainless steel, aluminum or its alloy, nickel, titanium, a resin material, or a film material.

The shape of the secondary battery may be selected depending upon the particular application, and it may be a coin-form, a cylindrical form, a square form or a laminate form. Further, the shapes of the positive electrode and the negative electrode may also be suitably selected to meet with the shape of the secondary battery.

The charging voltage of the secondary battery of the present invention is preferably at least 4.25 V, more preferably at least 4.30 V, further preferably at least 4.35 V, particularly preferably at least 4.40 V.

The secondary battery of the present invention as described above, employs the non-aqueous electrolyte solution of the present invention, whereby thermal runaway is less likely to occur, the stability is good, and it is excellent in battery properties such as cycle properties and rate properties. Thus, the secondary battery of the present invention may be used in various applications to e.g. mobile phones, portable game devices, digital cameras, digital video cameras, electric tools, notebook computers, portable information terminals, portable music players, electric vehicles, hybrid cars, electric trains, aircrafts, satellites, submarines, ships, uninterruptible power supply systems, robots and electric power storage systems. Further, the secondary battery of the present invention is particularly effective as a large size secondary battery for e.g. electric vehicles, hybrid cars, electric trains, aircrafts, satellites, submarines, ships, uninterruptible power supply systems, robots and electric power storage systems.

### EXAMPLES

Now, the present invention will be described in detail with reference to Examples, but it should be understood that the present invention is by no means restricted by the following description. Ex. 1 to 3, 7, 9, 11, 13, 15 to 21 are Examples of the present invention, and Ex. 4 to 6, 8, 10, 12 and 14 are Comparative Examples.

### [Abbreviations]

Abbreviations in the following Examples have the following meanings.
LPF: LiPF₆
LiFOB: Lithium difluoro(oxalato) borate (LiBF₂(C₂O₄))
LiDFOP: Lithium difluorobis(oxalato) phosphate (LiPF₂(C₂O₄)₂)
LiTFOP: Lithium tetrafluoro(oxalato) phosphate (LiPF₄(C₂O₄))
AE3000: CF₃CH₂OCF₂CF₂H (trade name: "ASAHIKLIN AE-3000", manufactured by Asahi Glass Co., Ltd.
HFE5510: CF₂HCF₂CH₂OCF₂CHFCF₃
DFAM: Methyl difluoroacetate
GBL: γ-butyrolactone
DMC: Dimethyl carbonate
DEC: Diethyl carbonate
PRE: Ethyl propionate
FEC: Fluoroethylene carbonate
VC: Vinylene carbonate

### [Preparation of electrodes for evaluation]

### (Negative electrode)

A step of mixing artificial graphite (4.25 g) and acetylene black (0.15 g), followed by stirring at a rotational speed of 2,000 rpm for one minute by means of a planetary centrifugal mixer (Awatorirentaro AR-E310, manufactured by Thinky Corporation), was repeated 3 times. Then, a step of adding a 1 mass% carboxymethyl cellulose aqueous solution (4.25 g), followed by stirring at a rotational speed of 2,000 rpm for 5 minutes by means of the above mixer, was repeated twice. Further, a 1 mass% carboxymethyl cellulose aqueous solution (4.25 g) was added, followed by stirring at a rotational speed of 2,000 rpm for 10 minutes by means of the above mixer. Then, a styrene-butadiene rubber aqueous dispersion latex (0.13 g) having a solid content concentration adjusted to 40 mass%, was added, followed by stirring at a rotational speed of 2,000 rpm for 5 minutes by means of the above mixer to obtain a slurry.

On a copper foil having a thickness of 20 µm, the above slurry was applied in a thickness of 150 µm and dried, followed by punching out in a circular shape having a diameter of 16 mm to obtain an electrode (negative electrode) for evaluation.

### (Positive electrode)

A step of mixing LiCoO₂ (trade name: "Selion C", manufactured by AGC Seimi Chemical Co. Ltd., 32.0 g) and carbon black (trade name: "Denka black", manufactured by Denki Kagaku Kogyo K.K., 0.80 g), followed by stirring at a rotational speed of 2,000 rpm for one minute by means of a planetary centrifugal mixer (Awatorirentaro AR-E310, manufactured by Thinky Corporation), was repeated 3 times. Then, a step of adding N-methyl-2-pyrrolidone (7.50 g), followed by stirring at a rotational speed of 2,000 rpm for 3 minutes by means of the above mixer, was repeated 3 times. Then, a step of adding N-methyl-2-pyrrolidone (1.0 g), followed by stirring at a rotational speed of 2,000 rpm for 3 minutes by means of the above mixer, was repeated 3 times. Further, an N-methyl-2-pyrrolidone solution of polyvinylidene fluoride (11 mass%, 7.45 g) was added, followed by stirring at a rotational speed of 2,000 rpm for one minute by means of the above mixer to obtain a slurry. On an aluminum foil having a thickness of 20 µm, the above slurry was applied in a thickness of 150 µm and dried, and the obtained coated electrode was pressed by a roll press and then punched out in a circular shape having a diameter of 15 mm to obtain an electrode (positive electrode) for evaluation.

### [Ex. 1]

LPF (0.15 g) as a lithium salt, was dispersed in AE3000 (0.31 g) and HFE5510 (0.54 g) as fluorinated solvents (A), and then, GBL (0.34 g) as a cyclic carboxylic acid ester compound (B) and DMC (0.15 g) as other solvent, were mixed to obtain a uniform solution. Thereafter, to the solution, LiFOB as a lithium salt was added to a concentration of 2 mass% to obtain a non-aqueous electrolyte solution 1.

The contents of the respective components in the non-aqueous electrolyte solution 1 are shown in Table 1.

The positive electrode and the negative electrode were disposed to face each other; between the electrodes, a polyolefin type porous membrane was interposed as an electrode separator for evaluation, and the non-aqueous electrolyte solution 1 (0.1 mL) was added to prepare a cell 1 comprising LiCoO₂ electrode-graphite electrode.

### [Ex. 2 to 21]

Non-aqueous electrolyte solutions 2 to 21 were obtained in the same manner as in Ex. 1 except that the composition of the respective compounds such as a lithium salt, etc. was changed as shown in Table 1. Further, cells 2 to 21 were prepared in the same manner as in Ex. 1 except that instead of the non-aqueous electrolyte solution 1, the electrolyte solutions 2 to 21 were used.

### [Charging/discharging test]

The cell obtained in each Ex. was charged to 3.4 V (cell voltage, the same applies hereinafter) at a constant current corresponding to 0.05C at 25°C and further charged to 4.35 V at a constant current corresponding to 0.2C, and further, charging was carried out until the current value at the charging lower limit voltage became a current corresponding to 0.02C. Thereafter, discharging to 3.0 V was carried out at a constant current corresponding to 0.2C. The charging/discharging capacities in this cycle 1 were taken as the initial charge capacity and the initial discharge capacity, and the proportion of the initial discharge capacity to the initial charge capacity [(initial discharge capacity)/(initial charge capacity) x 100] was taken as the initial charge/discharge efficiency (unit: %).

In each of cycles 2 to 4, charging to 4.35 V was carried out at a constant current corresponding to 0.2C, and further, charging was carried out until the current value at the charging lower limit voltage became a current corresponding to 0.02C. Thereafter, discharging to 3.0 V was carried out at a constant current corresponding to 0.2C.

In cycle 5, charging to 4.35 V was carried out at a constant current corresponding to 1.0C, and further, charging was carried out until the current value at the charging lower limit voltage became a current corresponding to 0.02C. Thereafter, discharging to 3.0 V was carried out at a constant current corresponding to 1.0C.

In cycles 6 to 10, a rate test was carried out. Charging was carried out to 4.35 V at a constant current corresponding to 1.0C and further continued until the current value at the charging lower limit voltage became a current corresponding to 0.02C. Discharging to 3.0V was carried out at a constant current corresponding to 0.1C in cycle 6, 0.2C in cycle 7, 0.5C in cycle 8, 1.0C in cycle 9, and 2.0C in cycle 10. For evaluation of battery properties, the proportion of the discharge capacity at 2.0C in cycle 10 to the discharge capacity at 0.1C in cycle 6 was evaluated as a 2.0C discharge capacity retention rate.

Thereafter, in cycles 11 to 100, charging was carried out to 4.35V at a constant current corresponding to 1.0C, and further, charging was carried out until the current value at the charging lower limit voltage became a current corresponding to 0.02C. Thereafter, discharging to 3.0V was carried out at a constant current corresponding to 1.0C.

The proportion of the discharge capacity in cycle 50 to the discharge capacity in cycle 11 was evaluated as a cycle 50 discharge capacity retention rate. Further, the proportion of the discharge capacity in cycle 100 to the discharge capacity in cycle 11 was evaluated as a cycle 100 discharge capacity retention rate.

The evaluation results of the initial charge/discharge efficiency, cycle 50 capacity retention rate, cycle 100 capacity retention rate and 2.0C discharge capacity retention rate in each Ex. are shown in Table 1.

Here, 1C means the amount of current at which the standard capacity of a battery is discharged in 1 hour.

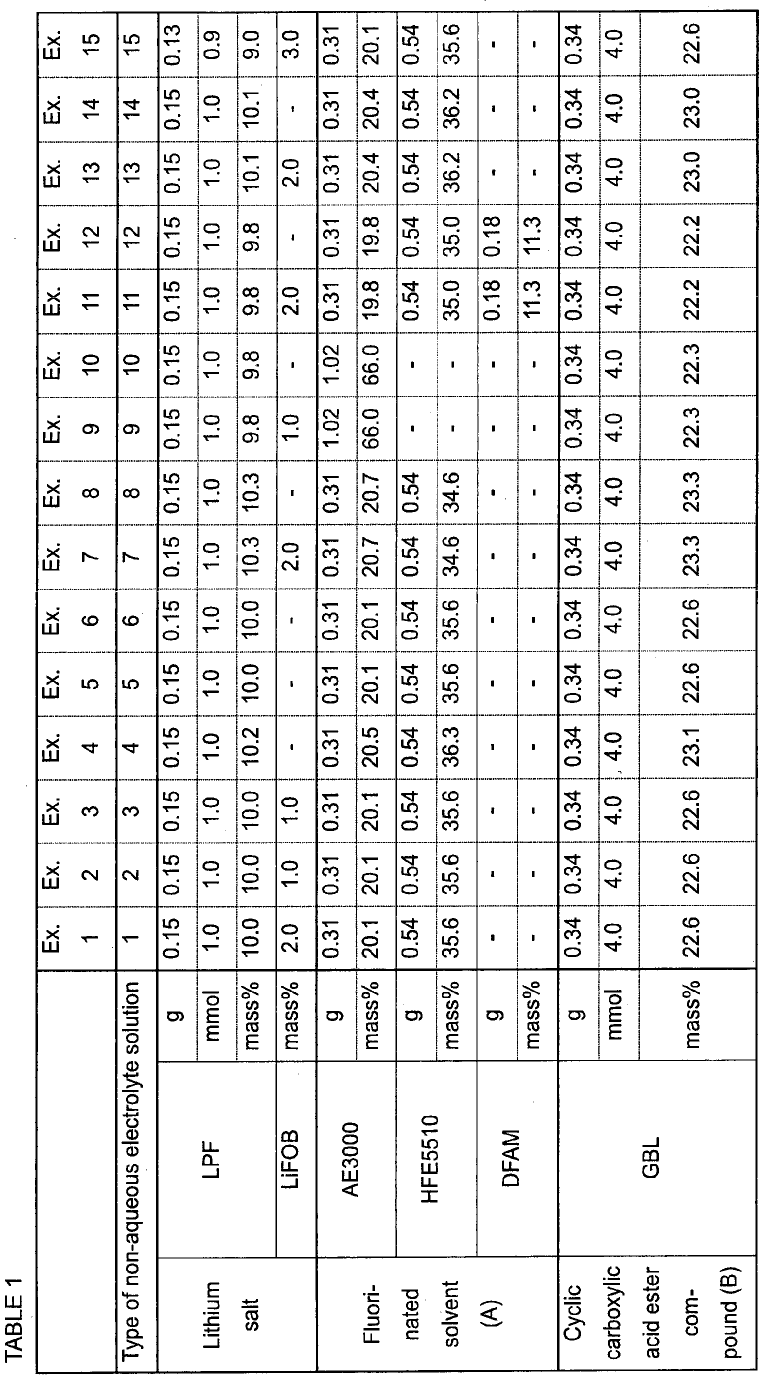

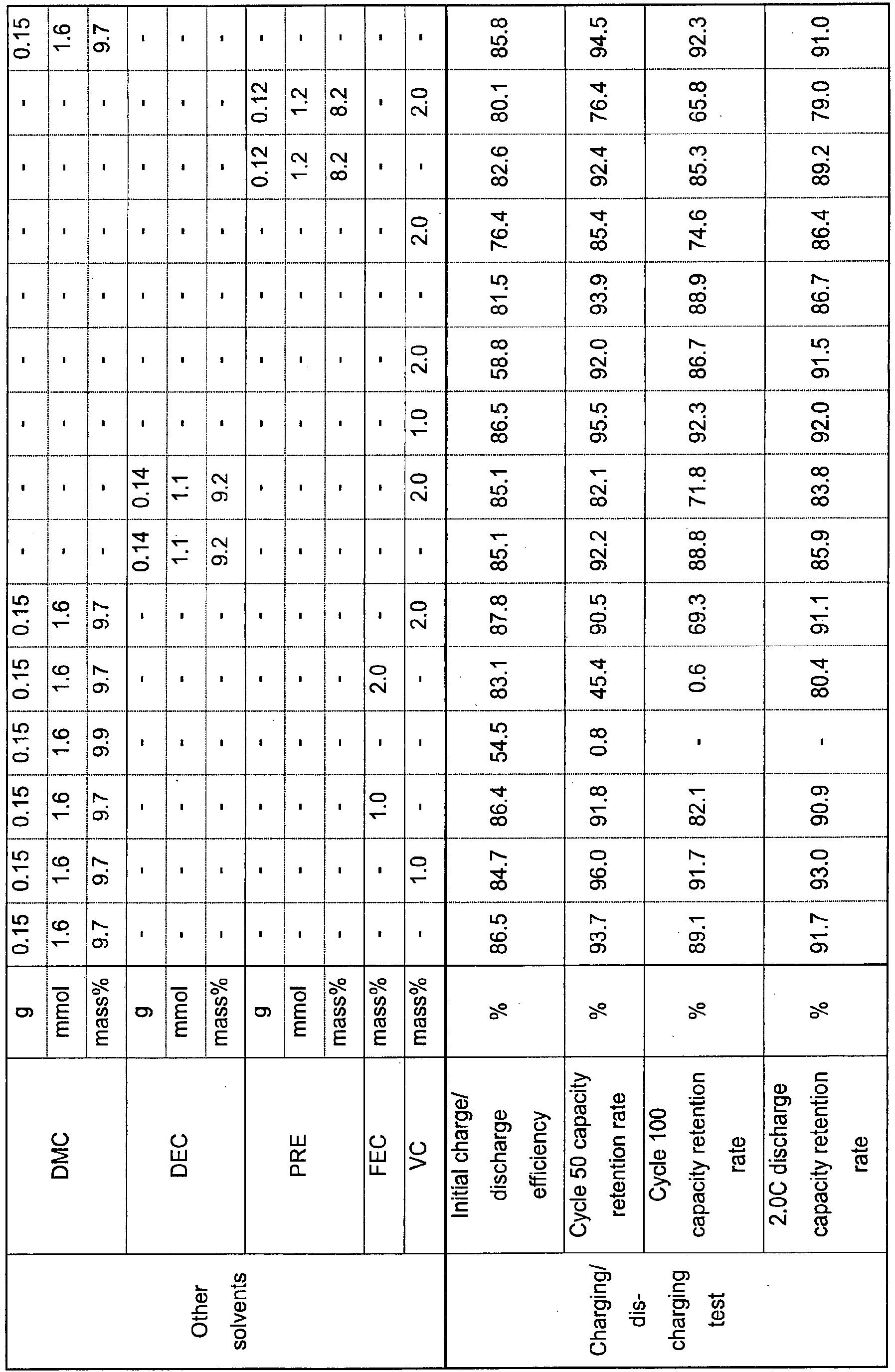

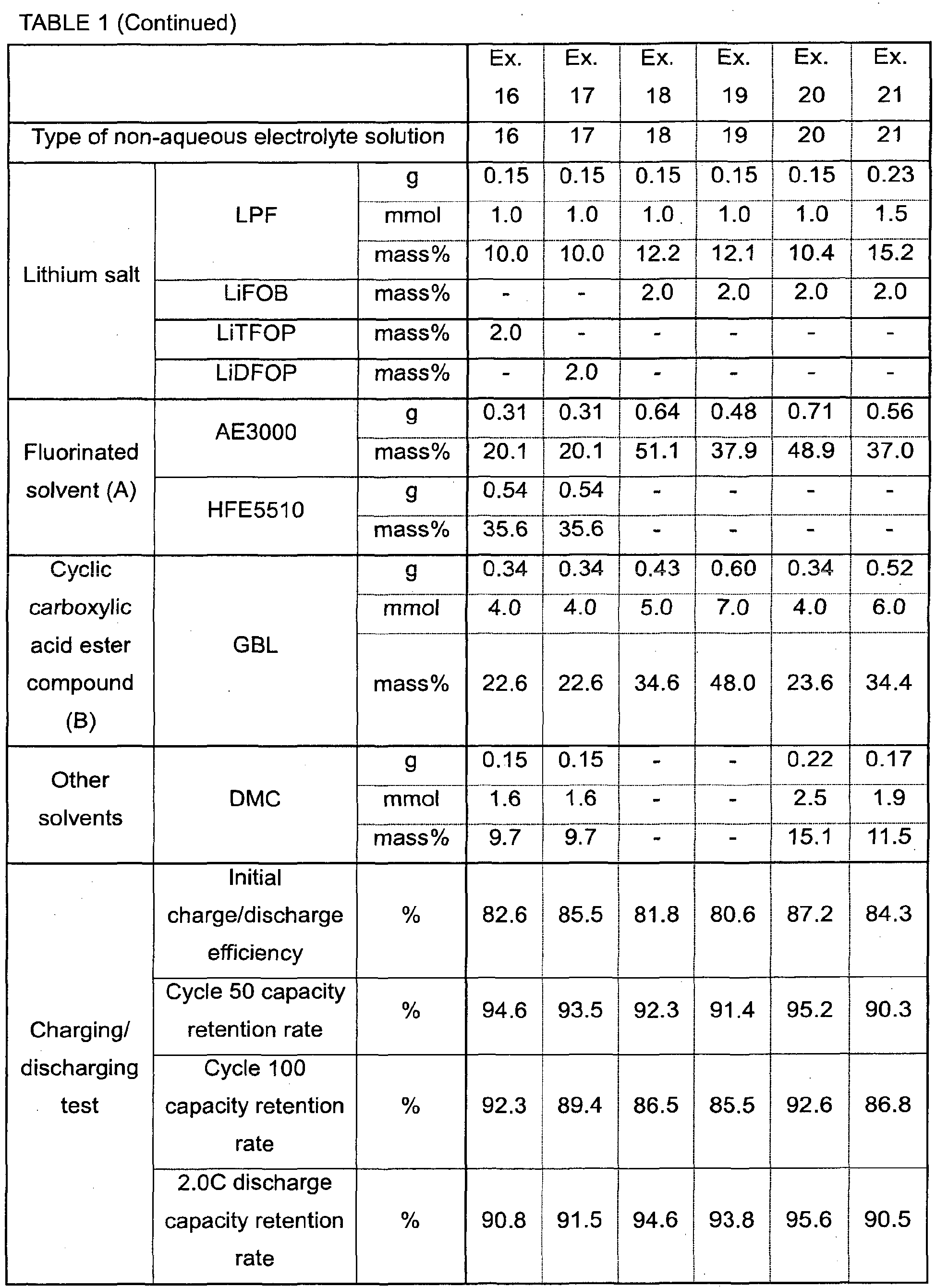

As shown in Table 1, in Ex. 1 wherein a non-aqueous electrolyte solution having LiFOB incorporated as the compound (1) to a liquid composition using a fluorinated ether compound as the main solvent, was employed, good initial charge/discharge efficiency, cycle 50 capacity retention rate, cycle 100 capacity retention rate and 2.0C discharge capacity retention rate were obtained, and battery properties such as cycle properties and rate properties were excellent, as compared with Ex. 4 wherein a non-aqueous electrolyte solution containing no LiFOB was employed.

Further, also in Ex. 2 and 9 wherein VC was used in combination as a non-fluorinated cyclic carbonate compound, excellent battery properties were obtained, as compared with Ex. 6 and 10 wherein the electrolyte solution contained no LiFOB.

Further, also in Ex. 3 wherein FEC was used in combination as a fluorinated cyclic carbonate compound, excellent battery properties were obtained, as compared with Ex. 5 wherein the electrolyte solution contained no LiFOB.

Further, also in Ex. 7 wherein DEC was used in combination as a non-fluorinated chain carbonate compound, excellent battery properties were obtained, as compared with Ex. 8 wherein a non-aqueous electrolyte solution containing no LiFOB was employed.

Further, also in Ex.11 wherein DFAM as a fluorinated chain carboxylic acid ester compound was used as the fluorinated solvent (A), excellent battery properties were obtained, as compared with Ex. 12 wherein the electrolyte solution contained no LiFOB.

Further, also in Ex.13 wherein PRE as a non-fluorinated chain carboxylic acid ester compound was used as other solvent, excellent battery properties were obtained, as compared with Ex. 14 wherein the electrolyte solution contained no LiFOB.

Further, also in Ex.15 wherein a non-aqueous electrolyte solution having LiFOB added in an amount of 3 mass% was employed, good battery properties were obtained.

Further, also in Ex.16 and 17 wherein LiTFOP or LiDFOP was employed as the compound (1), good battery properties were obtained. Further, also in Ex.18 and 19 wherein the electrolyte solution contained LiFOB, and the equivalent of the cyclic carboxylic acid ester compound (B) to the lithium salt was changed, in Ex. 20 wherein DMC was used as a co-solvent, and in Ex. 21 wherein the LiPF₆ concentration was increased, good battery properties were observed.

### INDUSTRIAL APPLICABILITY

The non-aqueous electrolyte solution for secondary batteries of the present invention is less likely to cause thermal runaway and excellent in stability, and thus is useful for the production of a lithium ion secondary battery excellent in battery properties such as cycle properties and rate properties.

## Claims

1. A non-aqueous electrolyte solution for secondary batteries, comprising an electrolyte salt and a liquid composition, wherein
the electrolyte salt is a lithium salt,
the lithium salt contains a compound represented by the following formula (1), and
the liquid composition comprises a fluorinated solvent (A) containing at least one member selected from the group consisting of a fluorinated ether compound, a fluorinated chain carboxylic acid ester compound and a fluorinated chain carbonate compound, and a cyclic carboxylic acid ester compound (B): 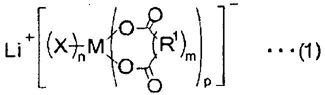 wherein M is a boron atom or a phosphorus atom, R¹ is a C₁₋₁₀ alkylene group which may have a substituent, X is a halogen atom, n is an integer of from 0 to 4, m is 0 or 1, and p is 1 or 2.

2. The non-aqueous electrolyte solution for secondary batteries according to Claim 1, wherein the content of the fluorinated solvent (A) in the non-aqueous electrolyte solution is from 30 to 80 mass%.

3. The non-aqueous electrolyte solution for secondary batteries according to Claim 1 or 2, wherein N_{B}/N_{Li}, i.e. the ratio of the total number of moles (N_{B}) of the cyclic carboxylic acid ester compound (B) to the total number of moles (N_{Li}) of lithium atoms derived from the lithium salt, is from 1.5 to 8.0.

4. The non-aqueous electrolyte solution for secondary batteries according to any one of Claims 1 to 3, wherein the compound represented by the formula (1) contains at least one member selected from the group consisting of compounds represented by the following formulae (1-1) to (1-5):

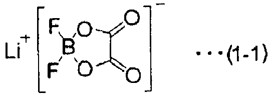

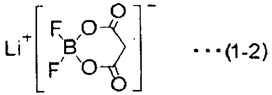

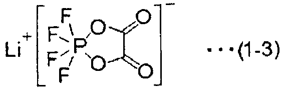

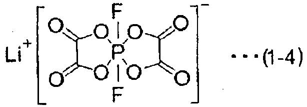

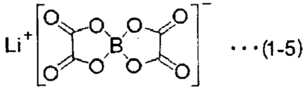

5. The non-aqueous electrolyte solution for secondary batteries according to any one of Claims 1 to 4, wherein in the non-aqueous electrolyte solution, the content of the compound represented by the formula (1) is from 0.01 to 10 mass%.

6. The non-aqueous electrolyte solution for secondary batteries according to any one of Claims 1 to 5, wherein the fluorinated ether compound is at least one member selected from the group consisting of compounds represented by the following formula (2) and compounds represented by the following formula (3):
R²-O-R³ ··· (2) 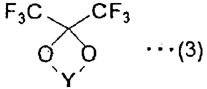
wherein each of R² and R³ which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₂₋₁₀ alkyl group having an etheric oxygen atom, or a C₂₋₁₀ fluorinated alkyl group having an etheric oxygen atom, provided that one or each of R² and R³ is a C₁₋₁₀ fluorinated alkyl group, a C₃₋₁₀ fluorinated cycloalkyl group or a C₂₋₁₀ fluorinated alkyl group having an etheric oxygen atom, and Y is a C₁₋₅ alkylene group, a C₁₋₅ fluorinated alkylene group, a C₂₋₅ alkylene group having an etheric oxygen atom, or a C₂₋₅ fluorinated alkylene group having an etheric oxygen atom.

7. The non-aqueous electrolyte solution for secondary batteries according to any one of Claims 1 to 6, wherein the cyclic carboxylic acid ester compound (B) is at least one member selected from the group consisting of compounds represented by the following formula (6): 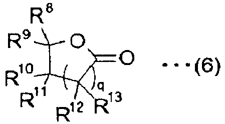 wherein each of R⁸ to R¹³ which are independent of each other, is a hydrogen atom, a fluorine atom, a chlorine atom, a C₁₋₂ alkyl group, a C₁₋₂ fluorinated alkyl group, or a C₂₋₃ alkyl group having an etheric oxygen atom, and q is an integer of from 0 to 3.

8. The non-aqueous electrolyte solution for secondary batteries according to any one of Claims 1 to 7, wherein the fluorinated ether compound is at least one member selected from the group consisting of CF₃CH₂OCF₂CHF₂, CF₃CH₂OCF₂CHFCF₃, CHF₂CF₂CH₂OCF₂CHF₂, CH₃CH₂CH₂OCF₂CHF₂, CH₃CH₂OCF₂CHF₂ and CHF₂CF₂CH₂OCF₂CHFCF₃.

9. The non-aqueous electrolyte solution for secondary batteries according to any one of Claims 1 to 8, wherein the fluorinated solvent (A) contains the fluorinated ether compound.

10. The non-aqueous electrolyte solution for secondary batteries according to any one of Claims 1 to 9, wherein the cyclic carboxylic acid ester compound (B) is at least one member selected from the group consisting of γ-butyrolactone and γ-valerolactone.

11. The non-aqueous electrolyte solution for secondary batteries according to any one of Claims 1 to 10, wherein the lithium salt contains LiPF₆.

12. The non-aqueous electrolyte solution for secondary batteries according to any one of Claims 1 to 11, wherein the content of the compound represented by the formula (1) in the lithium salt is from 0.05 to 95 mol%.

13. The non-aqueous electrolyte solution for secondary batteries according to any one of Claims 1 to 12, wherein the proportion of the mass of the cyclic carboxylic acid ester compound (B) to the total mass of at least one compound (C) selected from the group consisting of a cyclic carbonate compound, a chain carbonate compound having no fluorine atom, and a chain carboxylic acid ester compound having no fluorine atom, in the non-aqueous electrolyte solution, is at most 30 mass%.

14. The non-aqueous electrolyte solution for secondary batteries according to any one of Claims 1 to 13, wherein the content of a chain carbonate compound having no fluorine atom in the non-aqueous electrolyte solution is at most 20 mass%.

15. The non-aqueous electrolyte solution for secondary batteries according to any one of Claims 1 to 14, wherein the content of the lithium salt in the non-aqueous electrolyte solution is from 0.5 to 1.8 mol/L.

16. The non-aqueous electrolyte solution for secondary batteries according to any one of Claims 1 to 16, wherein the content of the cyclic carboxylic acid ester compound (B) in the non-aqueous electrolyte solution is from 4 to 60 mass%.

17. A lithium ion secondary battery comprising a positive electrode containing, as an active material, a material capable of absorbing and desorbing lithium ions, a negative electrode containing, as an active material, at least one member selected from the group consisting of metal lithium, an lithium alloy and a carbon material capable of absorbing and desorbing lithium ions, and the non-aqueous electrolyte solution for secondary batteries as defined in any one of Claims 1 to 16.

## Patentansprüche

1. Nicht-wässrige Elektrolytlösung für Akkumulatoren, umfassend ein Elektrolytsalz und eine Flüssigkeitszusammensetzung, wobei
das Elektrolytsalz ein Lithiumsalz ist,
das Lithiumsalz eine Verbindung, dargestellt durch die nachstehende Formel (1), enthält und
die Flüssigkeitszusammensetzung ein fluoriertes Lösungsmittel (A), enthaltend mindestens ein Mitglied, ausgewählt aus der Gruppe, bestehend aus einer fluorierten Etherverbindung, einer fluorierten kettenförmigen Carbonsäureesterverbindung und einer fluorierten kettenförmigen Carbonatverbindung, und eine zyklische Carbonsäureesterverbindung (B) umfasst: 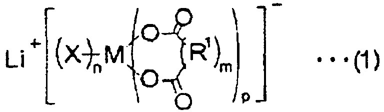 wobei M ein Boratom oder ein Phosphoratom ist, R¹ eine C₁₋₁₀-Alkylengruppe, welche einen Substituenten aufweisen kann, ist, X ein Halogenatom ist, n eine ganze Zahl von 0 bis 4 ist, m 0 oder 1 ist und p 1 oder 2 ist.

2. Nicht-wässrige Elektrolytlösung für Akkumulatoren nach Anspruch 1, wobei der Gehalt des fluorierten Lösungsmittels (A) in der nicht-wässrigen Elektrolytlösung von 30 bis 80 Massen-% beträgt.

3. Nicht-wässrige Elektrolytlösung für Akkumulatoren nach Anspruch 1 oder 2, wobei N_{B}/N_{Li}, d.h. das Verhältnis der Gesamtmolzahl (N_{B}) der zyklischen Carbonsäureesterverbindung (B) zu der Gesamtmolzahl (N_{Li}) von Lithiumatomen, abgeleitet von dem Lithiumsalz, von 1,5 bis 8,0 beträgt.

4. Nicht-wässrige Elektrolytlösung für Akkumulatoren nach einem der Ansprüche 1 bis 3, wobei die Verbindung, dargestellt durch die Formel (1), mindestens ein Mitglied, ausgewählt aus der Gruppe, bestehend aus Verbindungen, dargestellt durch die nachstehenden Formeln (1-1) bis (1-5), enthält:

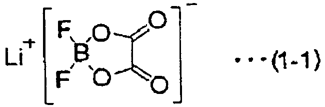

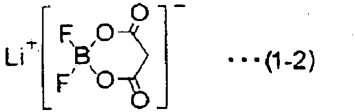

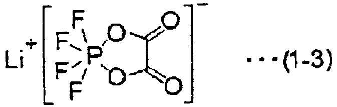

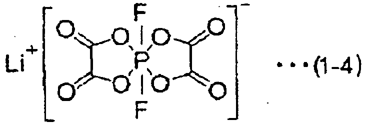

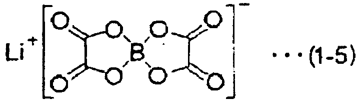

5. Nicht-wässrige Elektrolytlösung für Akkumulatoren nach einem der Ansprüche 1 bis 4, wobei in der nicht-wässrigen Elektrolytlösung der Gehalt der Verbindung, dargestellt durch die Formel (1), von 0,01 bis 10 Massen-% beträgt.

6. Nicht-wässrige Elektrolytlösung für Akkumulatoren nach einem der Ansprüche 1 bis 5, wobei die fluorierte Etherverbindung mindestens ein Mitglied, ausgewählt aus der Gruppe, bestehend aus Verbindungen, dargestellt durch die nachstehende Formel (2), und Verbindungen, dargestellt durch die nachstehende Formel (3), ist:
R²-Q-R³ ··· (2) 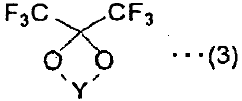
wobei jedes von R² und R³, welche unabhängig voneinander sind, eine C₁₋₁₀-Alkylgruppe, eine C₃₋₁₀-Cycloalkylgruppe, eine fluorierte C₁₋₁₀-Alkylgruppe, eine fluorierte C₃₋₁₀-Cycloalkylgruppe, eine C₂₋₁₀-Alkylgruppe mit einem etherischen Sauerstoffatom oder eine fluorierte C₂₋₁₀-Alkylgruppe mit einem etherischen Sauerstoffatom ist, mit der Maßgabe, dass eines oder jedes von R² und R³ eine fluorierte C₁₋₁₀-Alkylgruppe, eine fluorierte C₃₋₁₀-Cycloalkylgruppe oder eine fluorierte C₂₋₁₀-Alkylgruppe mit einem etherischen Sauerstoffatom ist, und Y eine C₁₋₅-Alkylengruppe, eine fluorierte C₁₋₅-Alkylengruppe, eine C₂₋₅-Alkylengruppe mit einem etherischen Sauerstoffatom oder eine fluorierte C₂₋₅-Alkylengruppe mit einem etherischen Sauerstoffatom ist.

7. Nicht-wässrige Elektrolytlösung für Akkumulatoren nach einem der Ansprüche 1 bis 6, wobei die zyklische Carbonsäureesterverbindung (B) mindestens ein Mitglied, ausgewählt aus der Gruppe, bestehend aus Verbindungen, dargestellt durch die nachstehende Formel (6), ist: 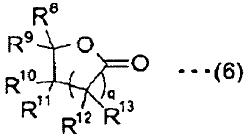 wobei jedes von R⁸ bis R¹³, welche unabhängig voneinander sind, ein Wasserstoffatom, ein Fluoratom, ein Chloratom, eine C₁₋₂-Alkylgruppe, eine fluorierte C₁₋₂-Alkylgruppe oder eine C₂₋₃-Alkylgruppe mit einem etherischen Sauerstoffatom ist und q eine ganze Zahl von 0 bis 3 ist.

8. Nicht-wässrige Elektrolytlösung für Akkumulatoren nach einem der Ansprüche 1 bis 7, wobei die fluorierte Etherverbindung mindestens ein Mitglied, ausgewählt aus der Gruppe, bestehend aus CF₃CH₂OCF₂CHF₂, CF₃CH₂OCF₂CHFCF₃, CHF₂CF₂CH₂OCF₂CHF₂, CH₃CH₂CH₂OCF₂CHF₂, CH₃CH₂OCF₂CHF₂ und CHF₂CF₂CH₂OCF₂CHFCF₃, ist.

9. Nicht-wässrige Elektrolytlösung für Akkumulatoren nach einem der Ansprüche 1 bis 8, wobei das fluorierte Lösungsmittel (A) die fluorierte Etherverbindung enthält.

10. Nicht-wässrige Elektrolytlösung für Akkumulatoren nach einem der Ansprüche 1 bis 9, wobei die zyklische Carbonsäureesterverbindung (B) mindestens ein Mitglied, ausgewählt aus der Gruppe, bestehend aus γ-Butyrolacton und γ-Valerolacton, ist.

11. Nicht-wässrige Elektrolytlösung für Akkumulatoren nach einem der Ansprüche 1 bis 10, wobei das Lithiumsalz LiPF₆ enthält.

12. Nicht-wässrige Elektrolytlösung für Akkumulatoren nach einem der Ansprüche 1 bis 11, wobei der Gehalt der Verbindung, dargestellt durch die Formel (1), in dem Lithiumsalz von 0,05 bis 95 mol% beträgt.

13. Nicht-wässrige Elektrolytlösung für Akkumulatoren nach einem der Ansprüche 1 bis 12, wobei der Anteil der Masse der zyklischen Carbonsäureesterverbindung (B) zu der Gesamtmasse von mindestens einer Verbindung (C), ausgewählt aus der Gruppe, bestehend aus einer zyklischen Carbonatverbindung, einer kettenförmigen Carbonatverbindung ohne Fluoratom und einer kettenförmigen Carbonsäureesterverbindung ohne Fluoratom, in der nicht-wässrigen Elektrolytlösung höchstens 30 Massen-% beträgt.

14. Nicht-wässrige Elektrolytlösung für Akkumulatoren nach einem der Ansprüche 1 bis 13, wobei der Gehalt einer kettenförmigen Carbonatverbindung ohne Fluoratom in der nicht-wässrigen Elektrolytlösung höchstens 20 Massen-% beträgt.

15. Nicht-wässrige Elektrolytlösung für Akkumulatoren nach einem der Ansprüche 1 bis 14, wobei der Gehalt des Lithiumsalzes in der nicht-wässrigen Elektrolytlösung von 0,5 bis 1,8 mol/L beträgt.

16. Nicht-wässrige Elektrolytlösung für Akkumulatoren nach einem der Ansprüche 1 bis 16, wobei der Gehalt der zyklischen Carbonsäureesterverbindung (B) in der nicht-wässrigen Elektrolytlösung von 4 bis 60 Massen-% beträgt.

17. Lithiumionenakkumulator, umfassend eine positive Elektrode, enthaltend, als ein aktives Material, ein Material, das imstande ist Lithiumionen zu absorbieren und zu desorbieren, eine negative Elektrode, enthaltend, als ein aktives Material, mindestens ein Mitglied, ausgewählt aus der Gruppe, bestehend aus metallischem Lithium, einer Lithiumlegierung und einem Kohlenstoffmaterial, das imstande ist Lithiumionen zu absorbieren und zu desorbieren, und die nicht-wässrige Elektrolytlösung für Akkumulatoren nach einem der Ansprüche 1 bis 16.

## Revendications

1. Solution d'électrolyte non aqueux pour piles rechargeables, comprenant un sel électrolyte et une composition liquide, dans laquelle
le sel électrolyte est un sel de lithium,
le sel de lithium contient un composé représenté par la formule (1) suivante, et
la composition liquide comprend un solvant fluoré (A) contenant au moins un membre choisi dans l'ensemble constitué par un composé éther fluoré, un composé ester d'acide carboxylique à chaîne fluorée et un composé carbonate à chaîne fluorée, et un composé ester d'acide carboxylique cyclique (B) : 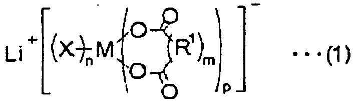 où M est un atome de bore ou un atome de phosphore, R¹ est un groupe alkylène en C₁ à C₁₀ pouvant porter un substituant, X est un atome d'halogène, n est un entier de 0 à 4, m vaut 0 ou 1, et p vaut 1 ou 2.

2. Solution d'électrolyte non aqueux pour piles rechargeables selon la revendication 1, dans laquelle la teneur en solvant fluoré (A) dans la solution d'électrolyte non aqueux est de 30 à 80 % en masse.

3. Solution d'électrolyte non aqueux pour piles rechargeables selon la revendication 1 ou 2, dans laquelle N_{B}/N_{Li}, c'est-à-dire le rapport du nombre total de moles (N_{B}) du composé ester d'acide carboxylique cyclique (B) sur le nombre total de moles (N_{Li}) d'atomes de lithium dérivés du sel de lithium, est de 1,5 à 8,0.

4. Solution d'électrolyte non aqueux pour piles rechargeables selon l'une quelconque des revendications 1 à 3, dans laquelle le composé représenté par la formule (1) contient au moins un membre choisi dans l'ensemble constitué par les composés représentés par les formules (1-1) à (1-5) suivantes :

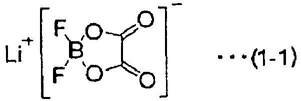

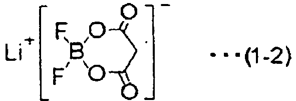

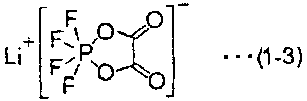

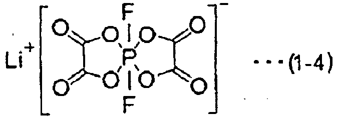

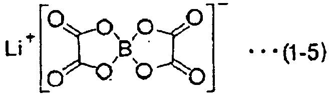

5. Solution d'électrolyte non aqueux pour piles rechargeables selon l'une quelconque des revendications 1 à 4, dans laquelle, dans la solution d'électrolyte non aqueux, la teneur en composé représenté par la formule (1) est de 0,01 à 10 % en masse.

6. Solution d'électrolyte non aqueux pour piles rechargeables selon l'une quelconque des revendications 1 à 5, dans laquelle le composé éther fluoré est au moins un membre choisi dans l'ensemble constitué par les composés représentés par la formule (2) suivante et les composés représentés par la formule (3) suivante :
R²-O-R³ ··· (2) 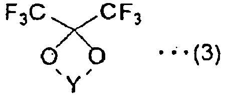
où chacun de R² et R³, qui sont indépendants l'un de l'autre, est un groupe alkyle en C₁ à C₁₀, un groupe cycloalkyle en C₃ à C₁₀, un groupe alkyle fluoré en C₁ à C₁₀, un groupe cycloalkyle fluoré en C₃ à C₁₀, un groupe alkyle en C₂ à C₁₀ comportant un atome d'oxygène d'éther, ou un groupe alkyle fluoré en C₂ à C₁₀ comportant un atome d'oxygène d'éther, sous réserve que l'un ou chacun parmi R² et R³ soit un groupe alkyle fluoré en C₁ à C₁₀, un groupe cycloalkyle fluoré en C₃ à C₁₀ ou un groupe alkyle fluoré en C₂ à C₁₀ comportant un atome d'oxygène d'éther, et Y est un groupe alkylène en C₁ à C₅, un groupe alkylène fluoré en C₁ à C₅, un groupe alkylène en C₂ à C₅ comportant un atome d'oxygène d'éther, ou un groupe alkylène fluoré en C₂ à C₅ comportant un atome d'oxygène d'éther.

7. Solution d'électrolyte non aqueux pour piles rechargeables selon l'une quelconque des revendications 1 à 6, dans laquelle le composé ester d'acide carboxylique cyclique (B) est au moins un membre choisi dans l'ensemble constitué par les composés représentés par la formule (6) suivante : 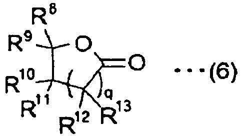 où chacun de R⁸ à R¹³, qui sont indépendants les uns des autres, est un atome d'hydrogène, un atome de fluor, un atome de chlore, un groupe alkyle en C₁ à C₁₂, un groupe alkyle fluoré en C₁ à C₂, ou un groupe alkyle en C₂ à C₃ comportant un atome d'oxygène d'éther, et q est un entier de 0 à 3.

8. Solution d'électrolyte non aqueux pour piles rechargeables selon l'une quelconque des revendications 1 à 7, dans laquelle le composé éther fluoré est au moins un membre choisi dans l'ensemble constitué par CF₃CH₂OCF₂CHF₂, CF₃CH₂OCF₂CHFCF₃, CHF₂CF₂CH₂OCF₂CHF₂, CH₃CH₂CH₂OCF₂CHF₂, CH₃CH₂OCF₂CHF₂ et CHF₂CF₂CH₂OCF₂CHFCF₃.

9. Solution d'électrolyte non aqueux pour piles rechargeables selon l'une quelconque des revendications 1 à 8, dans laquelle le solvant fluoré (A) contient le composé éther fluoré.

10. Solution d'électrolyte non aqueux pour piles rechargeables selon l'une quelconque des revendications 1 à 9, dans laquelle le composé ester d'acide carboxylique cyclique (B) est au moins un membre choisi dans l'ensemble constitué par la γ-butyrolactone et la γ-valérolactone.

11. Solution d'électrolyte non aqueux pour piles rechargeables selon l'une quelconque des revendications 1 à 10, dans laquelle le sel de lithium contient du LiPF₆.

12. Solution d'électrolyte non aqueux pour piles rechargeables selon l'une quelconque des revendications 1 à 11, dans laquelle la teneur en le composé représenté par la formule (1) dans le sel de lithium est de 0,05 à 95 % en moles.

13. Solution d'électrolyte non aqueux pour piles rechargeables selon l'une quelconque des revendications 1 à 12, dans laquelle la proportion de la masse du composé ester d'acide carboxylique cyclique (B) par rapport à la masse totale d'au moins un composé (C) choisi dans l'ensemble constitué par un composé carbonate cyclique, un composé carbonate à chaîne ne comportant pas d'atome de fluor, et un composé ester d'acide carboxylique à chaîne ne comportant pas d'atome de fluor, dans la solution d'électrolyte non aqueux, est d'au plus 30 % en masse.

14. Solution d'électrolyte non aqueux pour piles rechargeables selon l'une quelconque des revendications 1 à 13, dans laquelle la teneur en un composé carbonate à chaîne ne comportant pas d'atome de fluor dans la solution d'électrolyte non aqueux est d'au plus 20 % en masse.

15. Solution d'électrolyte non aqueux pour piles rechargeables selon l'une quelconque des revendications 1 à 14, dans laquelle la teneur en le sel de lithium dans la solution d'électrolyte non aqueux est de 0,5 à 1,8 mol/l.

16. Solution d'électrolyte non aqueux pour piles rechargeables selon l'une quelconque des revendications 1 à 15, dans laquelle la teneur en le composé ester d'acide carboxylique cyclique (B) dans la solution d'électrolyte non aqueux est de 4 à 60 % en masse.

17. Pile rechargeable de type lithium-ion comprenant une électrode positive contenant, à titre de matériau actif, un matériau capable d'absorber et de désorber les ions lithium, une électrode négative contenant, à titre de matériau actif, au moins un membre choisi dans l'ensemble constitué par le lithium métallique, un alliage de lithium et un matériau carboné capable d'absorber et de désorber les ions lithium, et la solution d'électrolyte non aqueux pour piles rechargeables telle que définie dans l'une quelconque des revendications 1 à 16.
